(19) **Europäisches Patentamt**
**European Patent Office**
**Office européen des brevets**

(11) **EP 4 686 296 A2**

(12) **EUROPEAN PATENT APPLICATION**
published in accordance with Art. 153(4) EPC

(43) Date of publication:
**28.01.2026 Bulletin 2026/05**

(51) International Patent Classification (IPC):
*H04W 72/232* (2023.01)      *H04L 5/14* (2006.01)
*H04L 5/00* (2006.01)

(21) Application number: **24775186.0**

(22) Date of filing: **20.03.2024**

(52) Cooperative Patent Classification (CPC):
**H04L 5/00; H04L 5/14; H04W 72/232**

(86) International application number:
**PCT/KR2024/003474**

(87) International publication number:
**WO 2024/196138 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **22.03.2023 KR 20230037309**

(71) Applicant: **Electronics and Telecommunications
Research Institute
Daejeon 34129 (KR)**

(72) Inventor: **NOH, Hoon Dong
Daejeon 34129 (KR)**

(74) Representative: **Betten & Resch
Patent- und Rechtsanwälte PartGmbB
Maximiliansplatz 14
80333 München (DE)**

(54) **METHOD AND DEVICE FOR SBFD-BASED COMMUNICATION IN COMMUNICATION SYSTEM**

(57)    A method and a device for SBFD-based communication in a communication system are disclosed. This method for a terminal comprises the steps of: receiving a first signaling message for a first operation from a first TRP; receiving a second signaling message for a second SBFD operation from a second TRP; if performing the first operation and the second SBFD operation in a first time interval is indicated, selecting one of the first operation and the second SBFD operation on the basis of a predetermined criterion; and performing the selected operation in the first time interval.

【FIG. 16】

## Description

[Technical Field]

The present disclosure relates to a subband full duplex (SBFD) technique, and more particularly, to an SBFD-based communication technique in a communication system supporting multi-transmission and reception point (mTRP).

[Background Art]

A communication system can be designed considering various scenarios, service requirements, and potential system compatibility. In a 5G communication system (e.g., New Radio (NR) communication system) and/or beyond 5G communication system (e.g., 6G communication system), the introduction of subband full duplex (SBFD) techniques is being discussed in consideration of frequency efficiency. In the communication system (e.g., 5G communication system, 6G communication system) that supports SBFD, communication nodes (e.g., base stations, terminals) can transmit and receive signals and/or channels simultaneously using the same time/frequency resource (e.g., the same time/frequency band). The same time/frequency resource refers to the same time resource and the same frequency resource. The communication system can further support multi-transmission and reception point (mTRP) techniques. In the communication system that supports mTRP techniques, methods for SBFD-based communication may be needed.

[Disclosure]

[Technical Problem]

The present disclosure is directed to providing a method and an apparatus for SBFD-based communication in a communication system supporting mTRP.

[Technical Solution]

A method of a terminal, according to exemplary embodiments of the present disclosure for achieving the above-described objective, may comprise: receiving a first signaling message for a first operation from a first transmission and reception point (TRP); receiving a second signaling message for a second subband full duplex (SBFD) operation from a second TRP; in response to an indication for performing the first operation and the second SBFD operation in a first time period, selecting one operation among the first operation and the second SBFD operation based on a preconfigured criterion; and performing the one operation in the first time period, wherein the first operation is an uplink (UL) operation, a downlink (DL) operation, or a first SBFD operation.
When the first operation and the second SBFD operation collide in the first time period, the one operation may be selected, and when the first time period is a DL communication period, the first operation includes DL communication, and the second SBFD operation includes UL communication or when the first time period is a UL communication period, the first operation includes UL communication, and the second SBFD operation includes DL communication, the first operation and the second SBFD operation may be determined to collide.
The selecting of the one operation may comprise: comparing a first priority of the first operation with a second priority of the second SBFD operation; and selecting the one operation having a higher priority among the first operation and the second SBFD operation.
The selecting of the one operation may comprise: comparing a first reception time of the first signaling message with a second reception time of the second signaling message; and selecting the one operation indicated by a most recently received one signaling message among the first signaling message and the second signaling message.
The selecting of the one operation may comprise: comparing a first control resource set (CORESET) identifier (ID) of a CORESET from which the first signaling message is received with a second CORESET ID of a CORESET from which the second signaling message is received; and selecting the one operation indicated by one signaling message received from a CORESET having a lower CORESET ID among the first signaling message and the second signaling message.
The selecting of the one operation may comprise: identifying a type of each of the first signaling message and the second signaling message; and selecting the one operation indicated by one signaling message corresponding to a type having a higher priority among the first signaling message and the second signaling message, wherein the type is a radio resource control (RRC) message, a medium access control (MAC) control element (CE), or downlink control information (DCI).
The method may further comprise: performing a remaining operation other than the one operation among the first operation and the second SBFD operation in a second time period after the first time interval.

The first time period may be configured for a time division duplex (TDD) operation or unpaired spectrum operation, and a first subband of a frequency band for the first time period may be indicated as a UL subband or a DL subband by the second signaling message.

A terminal, according to exemplary embodiments of the present disclosure for achieving the above-described objective, may comprise at least one processor, and the at least one processor causes the terminal to perform: receiving a first signaling message for a first operation from a first transmission and reception point (TRP); receiving a second signaling message for a second subband full duplex (SBFD) operation from a second TRP; in response to an indication for performing the first operation and the second SBFD operation in a first time period, selecting one operation among the first operation and the second SBFD operation based on a preconfigured criterion; and performing the one operation in the first time period, wherein the first operation is an uplink (UL) operation, a downlink (DL) operation, or a first SBFD operation.

When the first operation and the second SBFD operation collide in the first time period, the one operation may be selected, and when the first time period is a DL communication period, the first operation includes DL communication, and the second SBFD operation includes UL communication or when the first time period is a UL communication period, the first operation includes UL communication, and the second SBFD operation includes DL communication, the first operation and the second SBFD operation may be determined to collide.

In the selecting of the one operation, the at least one processor may further cause the terminal to perform: comparing a first priority of the first operation with a second priority of the second SBFD operation; and selecting the one operation having a higher priority among the first operation and the second SBFD operation.

In the selecting of the one operation, the at least one processor may further cause the terminal to perform: comparing a first reception time of the first signaling message with a second reception time of the second signaling message; and selecting the one operation indicated by a most recently received one signaling message among the first signaling message and the second signaling message.

In the selecting of the one operation, the at least one processor may further cause the terminal to perform: comparing a first control resource set (CORESET) identifier (ID) of a CORESET from which the first signaling message is received with a second CORESET ID of a CORESET from which the second signaling message is received; and selecting the one operation indicated by one signaling message received from a CORESET having a lower CORESET ID among the first signaling message and the second signaling message.

In the selecting of the one operation, the at least one processor may further cause the terminal to perform: identifying a type of each of the first signaling message and the second signaling message; and selecting the one operation indicated by one signaling message corresponding to a type having a higher priority among the first signaling message and the second signaling message, wherein the type is a radio resource control (RRC) message, a medium access control (MAC) control element (CE), or downlink control information (DCI).

The at least one processor may further cause the terminal to perform: performing a remaining operation other than the one operation among the first operation and the second SBFD operation in a second time period after the first time interval.

The first time period may be configured for a time division duplex (TDD) operation or unpaired spectrum operation, and a first subband of a frequency band for the first time period may be indicated as a UL subband or a DL subband by the second signaling message.

[Advantageous Effects]

According to the present disclosure, a terminal may receive a first signaling message indicating a first operation from a first TRP and may receive a second signaling message indicating an SBFD operation from a second TRP. If the first operation and the SBFD operation collide in a first time period, the terminal can select one of the operations based on predetermined criteria and perform the selected operation. Consequently, communication in the communication system can be efficiently conducted, and the performance of the communication system can be improved.

[Description of Drawings]

FIG. 1 is a conceptual diagram illustrating exemplary embodiments of a communication system.
FIG. 2 is a block diagram illustrating exemplary embodiments of a communication node constituting a communication system.
FIG. 3 is a conceptual diagram illustrating exemplary embodiments of a QCL information transfer process through TCI state configuration and indication in a communication system.
FIG. 4 is a conceptual diagram illustrating exemplary embodiments of a TCI state activation/deactivation MAC CE in a communication system.

FIG. 5 is a conceptual diagram illustrating exemplary embodiments of a TCI state indication MAC CE in a communication system.

FIG. 6 is a conceptual diagram illustrating exemplary embodiments of slot configurations according to slot formats in a communication system.

FIG. 7 is a conceptual diagram illustrating exemplary embodiments of a method for allocating one or more operation modes within a resource period.

FIG. 8 is a conceptual diagram illustrating exemplary embodiments of a method for allocating one or more operation modes within a resource period.

FIG. 9 is a conceptual diagram illustrating exemplary embodiments of a method for allocating one or more operation modes within a resource period.

FIG. 10 is a conceptual diagram illustrating exemplary embodiments of an SBFD configuration method.

FIG. 11A is a conceptual diagram illustrating exemplary embodiments of a single DCI-based mTRP communication method.

FIG. 11B is a conceptual diagram illustrating exemplary embodiments of a multi-DCI-based mTRP communication method.

FIG. 12 is a conceptual diagram illustrating exemplary embodiments of mTRP-based SBFD operations.

FIG. 13 is a conceptual diagram illustrating exemplary embodiments of resource allocation by mTRP.

FIG. 14 is a conceptual diagram illustrating a misalignment situation between a sDCI-based mTRP operation and an SBFD operation.

FIG. 15 is a conceptual diagram illustrating a misalignment situation between a sDCI-based mTRP operation and an SBFD operation.

FIG. 16 is a flowchart illustrating an operation of a terminal in a misalignment situation.

FIG. 17 is a conceptual diagram illustrating an operation of a terminal in a misalignment situation.

FIG. 18 is a flowchart illustrating an operation of a terminal in a misalignment situation.

FIG. 19 is a conceptual diagram illustrating an operation of a terminal in a misalignment situation.

[Mode for Invention]

Since the present disclosure may be variously modified and have several forms, specific exemplary embodiments will be shown in the accompanying drawings and be described in detail in the detailed description. It should be understood, however, that it is not intended to limit the present disclosure to the specific exemplary embodiments but, on the contrary, the present disclosure is to cover all modifications and alternatives falling within the spirit and scope of the present disclosure.

Relational terms such as first, second, and the like may be used for describing various elements, but the elements should not be limited by the terms. These terms are only used to distinguish one element from another. For example, a first component may be named a second component without departing from the scope of the present disclosure, and the second component may also be similarly named the first component. The term "and/or" means any one or a combination of a plurality of related and described items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

When it is mentioned that a certain component is "coupled with" or "connected with" another component, it should be understood that the certain component is directly "coupled with" or "connected with" to the other component or a further component may be disposed therebetween. In contrast, when it is mentioned that a certain component is "directly coupled with" or "directly connected with" another component, it will be understood that a further component is not disposed therebetween.

The terms used in the present disclosure are only used to describe specific exemplary embodiments, and are not intended to limit the present disclosure. The singular expression includes the plural expression unless the context clearly dictates otherwise. In the present disclosure, terms such as 'comprise' or 'have' are intended to designate that a feature, number, step, operation, component, part, or combination thereof described in the specification exists, but it should be understood that the terms do not preclude existence or addition of one or more features, numbers, steps, operations, components, parts, or combinations thereof.

Unless otherwise defined, all terms (including technical and scientific terms) used herein have the same meaning as commonly understood by one of ordinary skill in the art to which this disclosure belongs. Terms that are generally used and have been in dictionaries should be construed as having meanings matched with contextual meanings in the art. In this description, unless defined clearly, terms are not necessarily construed as having formal meanings.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

A communication system to which exemplary embodiments according to the present disclosure are applied will be described. The communication system may be a 4G communication system (e.g., long-term evolution (LTE) communication system, LTE-A communication system), a 5G communication system (e.g., new radio (NR) communication system), a 6G communication system, or the like. The 4G communication system may support communication in a frequency band of 6 GHz or below, and the 5G communication system and/or 6G communication system may support communication in a frequency band of 6 GHz or above as well as a frequency band of 6 GHz or below.

A communication system (e.g., communication network) to which exemplary embodiments according to the present invention are applied may include a non-terrestrial network (NTN). The 4G communication system, 5G communication system, 6G communication system, or the like may be classified as a terrestrial network. The non-terrestrial network may operate based on 4G communication technology, 5G communication technology, and/or 6G communication technology. The non-terrestrial network may support communication in a frequency band of 6 GHz or above as well as a frequency band of 6 GHz or below.

A communication system to which exemplary embodiments according to the present disclosure are applied is not limited to the contents described below, and the exemplary embodiments according to the present disclosure may be applied to various communication systems. Here, the communication system may be used with the same meaning as the communication network. 'LTE' may refer to '4G communication system', 'LTE communication system', or 'LTE-A communication system'. 'NR' may refer to '5G communication system' or 'NR communication system'

In the present disclosure, "configuration of an operation (e.g., transmission operation)" may refer to signaling of "control information (e.g., information element, parameter) for the operation" and/or "information indicating to perform the operation". In other words, 'an operation (e.g., transmission operation) is configured to a communication node' may mean that the communication node receives 'configuration information (e.g., information element(s), parameter(s)) for the operation' and/or 'information indicating to perform the operation'. 'information element(s) (e.g., parameter(s)) are configured to a communication node' may mean 'the information element(s) are signaled to the communication node (e.g., the communication node receives the information element(s))'. Signaling may be at least one of system information (SI) signaling (e.g., transmission of a system information block (SIB) and/or a master information block (MIB)), RRC signaling (e.g., transmission of RRC parameters and/or higher layer parameters), MAC control element (CE) signaling, or PHY signaling (e.g., transmission of downlink control information (DCI), uplink control information (UCI), and/or sidelink control information (SCI)). The signaling may mean a transmission operation and/or a reception operation of a signaling message.

In the present disclosure, a signal may have a meaning including a channel as well as a signal. A channel may have a meaning including a signal as well as a channel. A time may refer to a time point or a duration. A time point may refer to a time. A time and a time point may be used with the same meaning. A reception time of a signal and/or channel may refer to a reception start time or a reception end time. A transmission time of a signal and/or channel may refer to a transmission start time or a transmission end time.

Throughout the present disclosure, a network may include, for example, a wireless Internet such as wireless fidelity (WiFi), mobile Internet such as a wireless broadband Internet (WiBro) or a world interoperability for microwave access (WiMax), 2G mobile communication network such as a global system for mobile communication (GSM) or a code division multiple access (CDMA), 3G mobile communication network such as a wideband code division multiple access (WCDMA) or a CDMA2000, 3.5G mobile communication network such as a high speed downlink packet access (HSDPA) or a high speed uplink packet access (HSUPA), 4G mobile communication network such as a long term evolution (LTE) network or an LTE-Advanced network, 5G mobile communication network, 6G mobile communication network, or the like.

Throughout the present disclosure, a terminal may refer to a user equipment (UE), an access terminal, mobile terminal, station, subscriber station, mobile station, portable subscriber station, node, device, apparatus, or the like.

Here, a desktop computer, laptop computer, tablet PC, wireless phone, mobile phone, smart phone, smart watch, smart glass, e-book reader, portable multimedia player (PMP), portable game console, navigation device, digital camera, digital multimedia broadcasting (DMB) player, digital audio recorder, digital audio player, digital picture recorder, digital picture player, digital video recorder, digital video player, or the like having communication capability may be used as the terminal.

Throughout the present disclosure, the base station may refer to a node B, evolved node B, base transceiver station (BTS), eNB, gNB, radio base station, radio transceiver, access point, access node, road side unit (RSU), digital unit (DU), cloud digital unit (CDU, radio remote head (RRH), radio unit (RU), transmission point (TP), transmission and reception point (TRP), relay node, or the like.

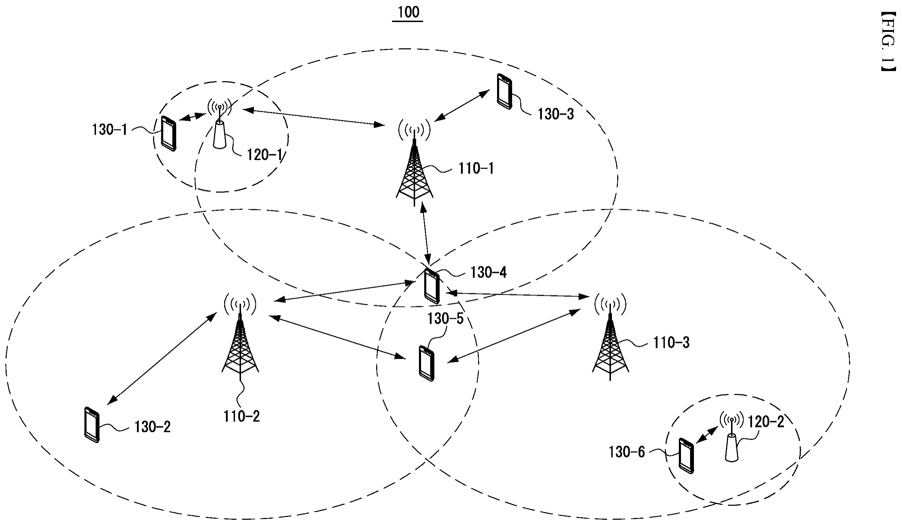

FIG. 1 is a conceptual diagram illustrating exemplary embodiments of a communication system.

Referring to FIG. 1, a communication system 100 may comprise a plurality of communication nodes 110-1, 110-2, 110-3, 120-1, 120-2, 130-1, 130-2, 130-3, 130-4, 130-5, and 130-6. The plurality of communication nodes may support 4G communication (e.g., long term evolution (LTE), LTE-advanced (LTE-A)), 5G communication (e.g., new radio (NR)), 6G communication, etc. specified in the 3rd generation partnership project (3GPP) standards. The 4G communication may be performed in frequency bands below 6GHz, and the 5G and/or 6G communication may be performed in frequency bands above 6GHz as well as frequency bands below 6GHz.

For example, in order to perform the 4G communication, 5G communication, and/or 6G communication, the plurality of communication may support a code division multiple access (CDMA) based communication protocol, wideband CDMA (WCDMA) based communication protocol, time division multiple access (TDMA) based communication protocol, frequency division multiple access (FDMA) based communication protocol, orthogonal frequency division multiplexing (OFDM) based communication protocol, filtered OFDM based communication protocol, cyclic prefix OFDM (CP-OFDM) based communication protocol, discrete Fourier transform spread OFDM (DFT-s-OFDM) based communication protocol, orthogonal frequency division multiple access (OFDMA) based communication protocol, single carrier FDMA (SC-FDMA) based communication protocol, non-orthogonal multiple access (NOMA) based communication protocol, generalized frequency division multiplexing (GFDM) based communication protocol, filter bank multi-carrier (FBMC) based communication protocol, universal filtered multi-carrier (UFMC) based communication protocol, space division multiple access (SDMA) based communication protocol, or the like.

The communication system 100 may further include a core network. When the communication 100 supports 4G communication, the core network may include a serving gateway (S-GW), packet data network (PDN) gateway (P-GW), mobility management entity (MME), and the like. When the communication system 100 supports 5G communication or 6G communication, the core network may include a user plane function (UPF), session management function (SMF), access and mobility management function (AMF), and the like.

Meanwhile, each of the plurality of communication nodes 110-1, 110-2, 110-3, 120-1, 120-2, 130-1, 130-2, 130-3, 130-4, 130-5, and 130-6 constituting the communication system 100 may have the following structure.

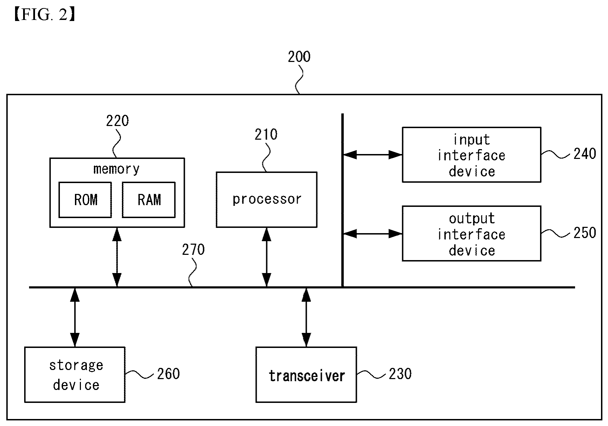

FIG. 2 is a block diagram illustrating exemplary embodiments of a communication node constituting a communication system.

Referring to FIG. 2, a communication node 200 may comprise at least one processor 210, a memory 220, and a transceiver 230 connected to the network for performing communications. Also, the communication node 200 may further comprise an input interface device 240, an output interface device 250, a storage device 260, and the like. Each component included in the communication node 200 may communicate with each other as connected through a bus 270.

However, each component included in the communication node 200 may not be connected to the common bus 270 but may be connected to the processor 210 via an individual interface or a separate bus. For example, the processor 210 may be connected to at least one of the memory 220, the transceiver 230, the input interface device 240, the output interface device 250 and the storage device 260 via a dedicated interface.

The processor 210 may execute a program stored in at least one of the memory 220 and the storage device 260. The processor 210 may refer to a central processing unit (CPU), a graphics processing unit (GPU), or a dedicated processor on which methods in accordance with embodiments of the present disclosure are performed. Each of the memory 220 and the storage device 260 may be constituted by at least one of a volatile storage medium and a non-volatile storage medium. For example, the memory 220 may comprise at least one of read-only memory (ROM) and random access memory (RAM).

Referring again to FIG. 1, the communication system 100 may comprise a plurality of base stations 110-1, 110-2, 110-3, 120-1, and 120-2, and a plurality of terminals 130-1, 130-2, 130-3, 130-4, 130-5, and 130-6. The communication system 100 comprising the base stations 110-1, 110-2, 110-3, 120-1, and 120-2 and the terminals 130-1, 130-2, 130-3, 130-4, 130-5, and 130-6 may be referred to as an 'access network'. Each of the first base station 110-1, the second base station 110-2, and the third base station 110-3 may form a macro cell, and each of the fourth base station 120-1 and the fifth base station 120-2 may form a small cell. The fourth base station 120-1, the third terminal 130-3, and the fourth terminal 130-4 may belong to cell coverage of the first base station 110-1. The second terminal 130-2, the fourth terminal 130-4, and the fifth terminal 130-5 may belong to cell coverage of the second base station 110-2. The fifth base station 120-2, the fourth terminal 130-4, the fifth terminal 130-5, and the sixth terminal 130-6 may belong to cell coverage of the third base station 110-3. The first terminal 130-1 may belong to cell coverage of the fourth base station 120-1, and the sixth terminal 130-6 may belong to cell coverage of the fifth base station 120-2.

Here, each of the plurality of base stations 110-1, 110-2, 110-3, 120-1, and 120-2 may refer to a Node-B (NB), evolved Node-B (eNB), gNB, base transceiver station (BTS), radio base station, radio transceiver, access point, access node, or the like. Each of the plurality of terminals 130-1, 130-2, 130-3, 130-4, 130-5, and 130-6 may refer to a user equipment (UE), terminal, access terminal, mobile terminal, station, subscriber station, mobile station, portable subscriber station, node, device, or the like.

Meanwhile, each of the plurality of base stations 110-1, 110-2, 110-3, 120-1, and 120-2 may operate in the same frequency band or in different frequency bands. The plurality of base stations 110-1, 110-2, 110-3, 120-1, and 120-2 may be connected to each other via an ideal backhaul or a non-ideal backhaul, and exchange information with each other via the ideal or non-ideal backhaul. Each of the plurality of base stations 110-1, 110-2, 110-3, 120-1, and 120-2 may be connected to the core network through the ideal or non-ideal backhaul. Each of the plurality of base stations 110-1, 110-2, 110-3, 120-1, and 120-2 may transmit a signal received from the core network to the corresponding terminal 130-1, 130-2, 130-3, 130-4, 130-5, or 130-6, and transmit a signal received from the corresponding terminal 130-1, 130-2, 130-3, 130-4, 130-5, or 130-6 to the core network.

In the communication system (e.g., 5G communication system), DCI may be transmitted to a terminal. The DCI may be transmitted to the terminal based on a DCI format. The DCI format may be defined as shown in Table 1 below. Table 1 may be an example of DCI formats, other DCI formats may be used, and the DCI formats may not be limited to specific forms.

[Table 1]

| DCI format | Usage |
|---|---|
| 0_0 | Used for scheduling a PUSCH within one cell |
| 0_1 | Used for scheduling one or more PUSCHs within one cell, or indicating downlink feedback information for a configured grant (CG) PUSCH (i.e., CG-DFI) |
| 0_2 | Used for scheduling a PUSCH within one cell |
| 1_0 | Used for scheduling a PDSCH within one cell |
| 1_1 | Used for scheduling a PDSCH within one cell or triggering a one-shot HARQ-ACK codebook feedback |
| 1_2 | Used for scheduling a PDSCH within one cell |
| 2_0 | Used for notifying a slot format, an available RB set, a channel occupancy time (COT) duration, and search space set group switching to a UE group |
| 2_1 | Used for notifying PRB(s) and OFDM symbol(s) assumed not to be intended to be used for transmission to a UE group |
| 2_2 | Used for transmission of a transmission power control (TPC) for a PUCCH and a PUSCH |
| 2_3 | Used for transmission of a TPC command group for SRS transmission by one or more UEs |
| 2_4 | Used for a UE to notify PRB(s) and OFDM symbol(s) for which UL transmission from the UE is cancelled to a UE group |
| 2_5 | Used for notifying availability of soft resources |
| 2_6 | Used for notifying power saving information outside a DRX active time to one or more UEs |
| 3_0 | Used for NR sidelink scheduling within one cell |
| 3_1 | Used for LTE sidelink scheduling within one cell |

A DCI may include downlink control information for one or more cells, and may be associated with one RNTI. The DCI may be encoded through the order of 1) information element multiplexing, 2) cyclic redundancy check (CRC) addition, 3) channel coding, and 4) rate matching, and decoding therefor may also be performed in consideration of the above steps. In the above description, 'a certain DCI is associated with one RNTI' may mean that CRC parity bits of the DCI are scrambled with the RNTI.

Referring to Table 1, certain DCI formats may include scheduling information of one or more PUSCHs for a certain cell. For example, a CRC of the DCI format 0_1 may be scrambled with a C-RNTI, configured scheduling-RNTI (CS-RNTI), semi-persistent CSI RNTI (SP-CSI-RNTI), or modulation coding scheme cell RNTI (MCS-C-RNTI). The DCI format 0_1 may include at least one of the following information.

☐ Identifier for DCI format (1 bit): Indicator indicating a UL DCI format, which is always set to 0 in the case of DCI format 0_1

☐ Carrier indicator (0 or 3 bits): Indicator indicating a CC scheduled by the corresponding DCI

☐ DFI flag (0 or 1 bit): Configured grant downlink feedback information (CG-DFI) indicator

- If the DCI format 0_1 is used for CG-DFI indication (when the DFI flag is set to 1), at least one of the following fields may be used:

☐ HARQ-ACK bitmap (16 bits), where the order of mapping HARQ process indexes within the bitmap is that the HARQ process indexes are mapped from the MSB to the LSB of the bitmap in ascending order. For each bit in the bitmap, a value of 1 indicates ACK, and a value of 0 indicates NACK.

☐ TPC command for a scheduled PUSCH (2 bits)
☐ All the remaining bits in the DCI format 0_1 are set to zero

- If the DCI format 0_1 is not used for CG-DFI indication (when there is no DFI flag field or DFI flag field is set to 0), at least one of the following fields may be used:

☐ UL/SUL indicator (0 or 1 bit): supplementary UL indicator.
☐ Bandwidth part indicator (0, 1, or 2 bits): Indicator indicating a BWP to be activated among uplink BWPs configured for the terminal.
☐ Frequency domain resource assignment: Indicator for allocating a frequency domain resource.
☐ Time domain resource assignment: Indicator for allocating a time domain resource.
☐ Frequency hopping flag (0 or 1 bit): Frequency axis hopping indicator
☐ Modulation and coding scheme (5 bits)
☐ New data indicator (NDI): Indicator indicating whether allocated data is new data or retransmission data.
☐ Redundancy version (RV): Indicator indicating an RV value when channel coding is applied to allocated data
☐ HARQ process number (4 bits): Indicator indicating a HARQ process to be allocated to scheduled data
☐ TPC command for a scheduled PUSCH (2 bits): TPC indicator
☐ SRS resource indicator: Aperiodic SRS resource selection indicator
☐ Precoding information and number of layers: Indicator indicating precoding and the number of transport layers to be used in PUSCH transmission
☐ Antenna ports: Indicator for uplink antenna ports to be used for PUSCH transmission
☐ SRS request: Indicator indicating whether to transmit aperiodic SRS
☐ CSI request: Indicator indicating whether and how to report channel state information
☐ PTRS-DMRS association: Indicator indicating a relationship between an uplink phase-noise tracking reference signal (PTRS) antenna port and a demodulation reference signal (DMRS) antenna port
☐ DMRS sequence initialization: Indicator for a DMRS sequence initialization value during OFDM-based uplink transmission
☐ UL-SCH indicator: Indicator indicating whether or not an uplink shared channel (UL-SCH) is included in a PUSCH (a PUSCH that does not include a UL-SCH needs to include CSI)
☐ Open-loop power control parameter set indication: Indicator indicating a set of open-loop power control (OPLC) parameter set
☐ Priority indicator: Uplink transmission priority indicator
☐ Invalid symbol pattern indicator: Indicator indicating whether to apply an invalid symbol pattern configured by a higher layer

Meanwhile, a CRC of the DCI format 1_1 may be scrambled with a C-RNTI, CS-RNTI, or MCS-C-RNTI, and the DCI format 1_1 may include at least one of the following information.
☐ Identifier for DCI format (1 bit): Indicator indicating a DL DCI format, which is always set to 1 in the case of DCI format 1_1
☐ Carrier indicator (0 or 3 bits): Indicator indicating a CC scheduled by the corresponding DCI
☐ Bandwidth part indicator (0, 1, or 2 bits): Indicator indicating a BWP to be activated among downlink BWPs configured for the terminal
☐ Frequency domain resource assignment: Indicator for allocating a frequency domain resource
☐ Time domain resource assignment: Indicator for allocating a time domain resource
☐ PRB bundling size indicator: Indicator indicating a type (i.e., static or dynamic) and a size of PRB bundling
☐ Rate matching indicator: Indicator indicating a rate matching pattern configured by a higher layer
☐ ZP CSI-RS trigger: Indicator for applying aperiodic zero-power (ZP) CSI-RS
☐ MCS, NDI, and RV fields for a transport block 1
☐ MCS, NDI, and RV fields for a transport block 2
☐ HARQ process number: Indicator indicating a HARQ process to be allocated to scheduled data
☐ Downlink assignment index: DAI indicator for HARQ-ACK codebook generation in TDD operation
☐ TPC command for a scheduled PUCCH: Power control indicator for PUCCH transmission
☐ PUCCH resource indicator: Indicator indicating a PUCCH resource for transmitting HARQ-ACK information for an allocated PDSCH or a predetermined PDSCH set
☐ PDSCH-to-HARQ_feedback timing indicator: Indicator indicating a time domain offset between the allocated PDSCH and the PUCCH
☐ Antenna port(s): Indicator indicating antenna ports to be used for PDSCH transmission/reception
☐ Transmission configuration indication: Indicator indicating transmission configuration information (TCI) to be used for PDSCH transmission and reception

□ SRS request: Indicator indicating whether to transmit aperiodic SRS
□ DMRS sequence initialization: Indicator for a DMRS sequence initialization value used for PDSCH transmission and reception
□ Priority indicator: PDSCH reception priority indicator

Meanwhile, certain DCI formats may be used to deliver the same control information to one or more terminals. For example, a CRC of the DCI format 2_3 may be scrambled with a transmit power control-sounding reference signal-RNTI (TPC-SRS-RNTI), and may include at least one of the following information.

□ Block number 1, Block number 2, ..., Block number B: Indicators indicating resource regions to which the DCI format 2_3 is applied. A starting part of the block is configured by a higher layer parameter *startingBitOfFormat2-3* or *startingBitOfFormat2-3SUL-v1530*.

- When a terminal for which a higher layer parameter *srs-TPC-PDCCH-Group* is set to type A performs uplink transmission without a PUCCH and PUSCH or uplink transmission in which SRS power control is not tied to PUSCH power control, one block is configured by the higher layer, and the following fields are defined for the block.

□ SRS request (0 or 2 bits): Aperiodic SRS transmission indicator
□ TPC command number 1, TPC command number 2, ...,TPC command number N: Indicators indicating uplink power control to be applied to a UL carrier indicated by a higher layer parameter *cc-IndexInOneCC-Set*.

- When a terminal for which a higher layer parameter *srs-TPC-PDCCH-Group* is set to type B performs uplink transmission without a PUCCH and PUSCH or uplink transmission in which SRS power control is not tied to PUSCH power control, one or more blocks may be configured by the higher layer, and the following fields are defined for each block.

□ SRS request (0 or 2 bits): Aperiodic SRS transmission indicator.
□ TPC command (2 bits)

Meanwhile, certain DCI formats may be used to deliver the same control information to one or more terminals. A CRC of the DCI format 2_0 may be scrambled with a slot format indicator (SFI)-RNTI. The DCI format 2_0 may be used to notify information such as slot format, COT duration, available RB set, search space set group (SSSG) switching, and the like. The DCI format 2_0 may include at least one of the following information elements.

□ If *slotFormatCombToAddModList* is configured
○ Slot format indicator 1, Slot format indicator 2, ..., Slot format indicator N
□ If *availableRB-SetsToAddModList-r16* is configured
○ Available RB set indicator 1, Available RB set indicator 2, ..., Available RB set indicator N1
□ If *co-DurationsPerCellToAddModList-r16* is configured
○ COT duration indicator 1, COT duration indicator 2, ..., COT duration indicator N2
□ If *searchSpaceSwitchTriggerToAddModList-r16* is configured
○ SSSG switching flag 1, SSSG switching flag 2, ..., SSSG switching flag M

The size of DCI format 2_0 may be set to one of 1 to 128 bits by a higher layer.
Meanwhile, the DCI format 2_5 may be used to notify availability of soft type resources of integrated access and backhaul (IAB) nodes. A CRC of the DCI format 2_5 may be scrambled with an available indicator (AI)-RNTI. The DCI format 2_5 may include the following information elements:

□ Availability indicator 1, Availability indicator 2, ..., Availability indicator N

The size of DCI format 2_5 may be set to one of values less than 128 bits by a higher layer.
Meanwhile, the base station may transmit configuration information of a CORESET #0 and a search space #0, identical or similar to that shown in Table 2 to the terminal. The terminal may receive the configuration information of the CORESET #0 and the search space #0 from the terminal.

[Table 2]

```
PDCCH-ConfigSIB1 ::=                    SEQUENCE {
     controlResourceSetZero
     searchSpaceZero
}


ControlResourceSetZero     // indicates a configuration value (0~15) of a
CORESET #0 within an initial BWP
SearchSpaceZero            // indicates a configuration value (0~15) of a search
space #0 within an initial BWP
```

The terminal may refer to the following higher layer configurations for cell-specific PDCCH monitoring, which are defined in Tables 3 to 6.

[Table 3]

```
PDCCH-ConfigCommon ::=                  SEQUENCE {
     controlResourceSetZero // indicates a configuration value (0~15) of a
CORESET #0 within an initial BWP
     commonControlResourceSet
               // configure a common CORESET by referring to CORESET
configuration
     searchSpaceZero       // indicates a configuration value (0~15) of a search space
#0 within an initial BWP
     commonSearchSpaceList   // configures a search sapce to be used for cell-
specific PDCCH monitoring by referring to up to four search space configurations
```

```
     searchSpaceSIB1          // search space configuration for SIB1
     searchSpaceOtherSystemInformation   // search space configuration for SIB2 or
other SIBs
     pagingSearchSpace              // search space configuration for paging
     ra-SearchSpace                 // search space configuration for
random access procedure
     ...
}
```

[Table 4]

```
ControlResourceSet ::=                 SEQUENCE {
    controlResourceSetId           // CORESET ID (a value other than 0 is used)
    frequencyDomainResources       // configuration of frequency resources of a
CORESET
    duration                       // configuration of a time-axis length
(symbols) of a CORESET
    cce-REG-MappingType                CHOICE { // CCE-to-REG
mapping configuration
        interleaved                        SEQUENCE {
            reg-BundleSize
            interleaverSize
            shiftIndex
        },
        nonInterleaved
    },
    precoderGranularity
    tci-StatesPDCCH-ToAddList
            // indicates a QCL relation possible between a QCL reference
RS and a PDCCH DMRS
    tci-StatesPDCCH-ToReleaseList
    tci-PresentInDCI            // indicates whether a TCI field exists within the
DCI format 1_1
    pdcch-DMRS-ScramblingID    // indicates a scrambling initialization value of a
PDCCH DMRS
    ...
}
```

[Table 5]

```
SearchSpace ::=                        SEQUENCE {
    searchSpaceId              // search space ID
    controlResourceSetId       // CORESET ID associated with the search
space
monitoringSlotPeriodicityAndOffset         CHOICE { // periodicity and offset of
a PDCCH monitoring slot
        sl1            // performs PDCCH monitoring in every slot
```

```
            ...
                      // (omitted) monitoring offset values when a PDCCH
monitoring periodicity is one of 2 to 1280 slots
            sl2560     // a monitoring offset value when a PDCCH monitoring
periodicity is 2560 slots
      }
      duration       // the number of slots where a search space exists for each
occasion
수

      monitoringSymbolsWithinSlot
            // a position of a first symbol on which monitoring is to be performed
within a PDCCH monitoring slot
   nrofCandidates                               SEQUENCE {
            aggregationLevel1    // The number of PDCCH candidates in case of
aggregation level 1
            aggregationLevel2    // The number of PDCCH candidates in case of
aggregation level 2
            aggregationLevel4   // The number of PDCCH candidates in case of
aggregation level 4
            aggregationLevel8   // The number of PDCCH candidates in case of
aggregation level 8
            aggregationLevel16   // The number of PDCCH candidates in case of
aggregation level 16
      }
      searchSpaceType                            CHOICE { // indicates a
search space type
```

[Table 6]

```
(common or UE-specific) and DCI formats
            common                                SEQUENCE {
                  dci-Format0-0-AndFormat1-0         SEQUENCE {
                  ...
            }
            dci-Format2-0                          SEQUENCE {
                  nrofCandidates-SFI                  SEQUENCE {
                  ...
            },
            ...
            }
            dci-Format2-1
            dci-Format2-2
            dci-Format2-3                          SEQUENCE {
                  dummy1
                  dummy2
            }
      },
```

```
        ue-Specific                              SEQUENCE {
            dci-Formats
                ...,
            }
        }
}
```

The terminal may refer to the following higher layer configurations for UE-specific PDCCH monitoring, which are defined in Table 7.

[Table 7]

```
PDCCH-Config ::=                         SEQUENCE {
        controlResourceSetToAddModList
                // At most three CORESETs are configured by referring to
CORESET configuration
        controlResourceSetToReleaseList
        searchSpacesToAddModList
                // At most ten search spaces are configured by referring to search
space configuration
searchSpacesToReleaseList
        downlinkPreemption          // downlink preemption indicator
        tpc-PUSCH                   // configuraion of reception of a group TPC for
PUSCH transmission
        tpc-PUCCH                   // configuration of reception of a group TPC for
PUCCH transmission
        tpc-SRS                     // configuration of reception of a group TPC for
SRS transmission
        ...,
}
```

The presence of a antenna port may mean a case in which a channel experienced by a symbol transmitted through the corresponding antenna port can be estimated or inferred from a channel experienced by another symbol transmitted through the same antenna port.

'Two different antenna ports are quasi co-located (QCLed)' may mean a case in which large-scale characteristics of a channel experienced by a symbol transmitted through one antenna port can be estimated or inferred from a channel experienced by a symbol transmitted through another antenna port. The large-scale characteristics of the channel may mean at least one of 'delay spread', 'Doppler spread', 'Doppler shift', 'average gain', 'average delay', and 'spatial Rx parameters'.

When time/frequency resources of a certain signal (e.g., QCL target RS) are insufficient and large-scale characteristics of a channel cannot be accurately measured with only the corresponding signal, information (i.e., QCL information) on another signal (e.g., QCL reference RS having sufficient time/frequency resources) having large-scale characteristics that can be reused for reception of the corresponding signal (i.e., QCL target RS) may be provided to the terminal to improve the channel measurement performance of the terminal. The NR communication system may support various QCL types as follows.

-    QCL-Type A: including {Doppler shift, Doppler spread, average delay, delay spread}.
-    QCL-Type B: including {Doppler shift, Doppler spread}
-    QCL-Type C: including {Doppler shift, average delay}
-    QCL-Type D: including {Spatial Rx parameters}

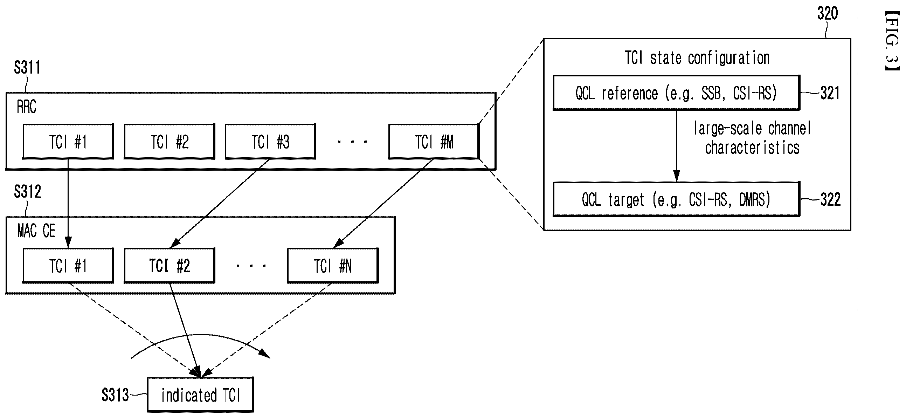

FIG. 3 is a conceptual diagram illustrating exemplary embodiments of a QCL information transfer process through TCI state configuration and indication in a communication system.

Referring to FIG. 3, a base station may configure at most M TCI states to a terminal through higher layer (e.g., RRC) signaling, in accordance with a UE capability report and a maximum value (e.g., 4, 8, 64, or 128 depending on a frequency band) defined in technical specifications (S311). In this case, each TCI state configuration 320 may include information on a signal or channel (i.e., QCL reference 321) that provides large-scale channel characteristics to a signal or channel (i.e., QCL target 322) referring to the TCI. One TCI state configuration 320 may include up to two references (i.e., qcl-Type1 and qcl-Type2). The first reference may be one of the QCL-Type A, QCL-Type B, and QCL-type C. For example, qcl-type1 $\in$ {QCL-type A, QCL-type B, QCL-type C}). The second reference may be the QCL-type D if present. For example, qcl-type 2 = QCL-type D.

Allowing the base station to apply all the TCIs configured through the RRC signaling in real time may greatly increase implementation complexity of the terminal. Therefore, the base station may transmit an activation message for some of the TCIs configured through the RRC signaling to the terminal through L2 signaling such as a MAC CE (S312). The base station may activate a maximum of N TCIs. N may be smaller than M. Each of N and M may be a natural number. The terminal may receive a dynamic indication only for the activated TCI(s).

The base station may dynamically indicate to the terminal some of the activated N TCIs through L1 signaling such as a DCI (S313). The terminal may apply QCL information indicated by the corresponding TCI at a predetermined timing after receiving the L1 signaling, and may perform a reception operation for the signal or channel.

The TCI state indication steps including the 'RRC signaling (S311)', 'MAC CE signaling (S312)', and 'DCI signaling (S313)' of FIG. 3 may be partially omitted depending on a type of the QCL target RS. For example, when the QCL target is a PDSCH DMRS, and one or more TCI states are configured through RRC signaling, the base station may indicate the TCI state using all the steps of FIG. 3. However, when the QCL target is a PDSCH DMRS, and a single TCI state is configured through RRC signaling, the MAC CE signaling (S312) and the DCI signaling step (S313) may be omitted. Similarly, when the QCL target is a PDCCH DMRS, the DCI signaling step S313 may be omitted. Specifically, the terminal may obtain configuration information for the TCI states and QCL information with reference to the RRC signaling identical or similar to those shown in Table 8.

[Table 8]

```
TCI-State ::=                          SEQUENCE { // TCI configuration (I.1-
00)
      tci-StateId        // TCI state ID
      qcl-Type1          // first QCL reference configured by referring to QCL
information
      qcl-Type2          // second QCL reference configured by referring to QCL
information

      ...
}


QCL-Info ::=                           SEQUENCE {
      cell                 // index of a cell in which QCL reference is
transmitted
      bwp-Id               // index of a BWP in which QCL reference is
transmitted
    referenceSignal                    CHOICE {
            csi-rs                     // index of a CSI-RS to be referred when
QCL reference is a CSI-RS
            ssb                        // index of an SSB to be referred when QCL
reference is an SSB
      },
      qcl-Type
      // QCL type to be applied to a QCL target (one of QCL-type A, QCL-type B,
QCL-type C, and QCL-type D)
      ...
}
}
```

The base station may indicate the terminal to activate or deactivate some of the TCI states configured by the RRC signaling through MAC CE signaling, or may indicate the terminal to apply a TCI state indicated by a MAC CE to the QCL target RS. For example, the base station may use the following MAC CE signaling according to the type of the QCL target RS.

- TCI state activation/deactivation MAC CE for a UE-specific PDSCH DMRS
- TCI state indication MAC CE for a UE-specific PDCCH DMRS
- TCI state activation/deactivation MAC CE for an enhanced UE-specific PDSCH DMRS

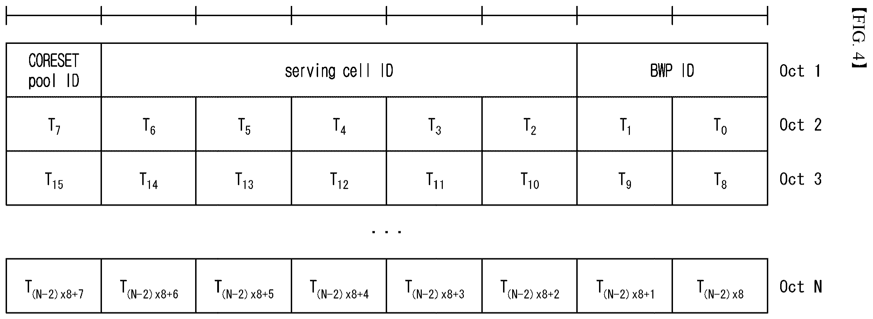

FIG. 4 is a conceptual diagram illustrating exemplary embodiments of a TCI state activation/deactivation MAC CE in a communication system.

Referring to FIG. 4, a first octet (Oct 1) in a TCI state activation/deactivation MAC CE for a UE-specific PDSCH DMRS may include a COREST pool ID field, a serving cell ID field, and a BWP ID field, and a second octet (Oct 2) to an N-th octet (Oct N) may include Ti fields indicating TCI state IDs i. The detailed meaning of each field may be as follows, and the sizes thereof may be variable.

- Serving cell ID: a serving cell ID to which the MAC CE is applied
- BWP ID: BWP ID to which the MAC CE is applied, which indicates a BWP in association with a BWP indication field within the DCI
- $T_i$: indicates a TCI state ID i. When this value is set to 0, it may mean that a TCI state whose TCI state ID is i is deactivated, and when this value is set to 1, it may mean that a TCI state whose TCI state ID is i is activated. The activated TCI states may be sequentially mapped to TCI indication field code points within the DCI.
- CORESET pool ID: If a DCI scheduling a PDSCH is monitored in a CORESET that does not include a higher layer parameter *coresetPoolIndex,* the CORESET pool ID field may be ignored. If a DCI scheduling a PDSCH is monitored in a CORESET including the higher layer parameter *coresetPoolIndex,* $T_i$ indication may be applied only when a value of the CORESET pool ID matches a value of *coresetPoolIndex* of the CORESET.

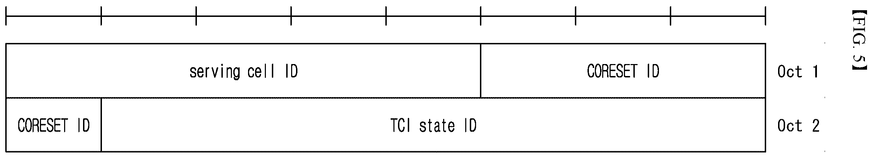

FIG. 5 is a conceptual diagram illustrating exemplary embodiments of a TCI state indication MAC CE in a communication system.

Referring to FIG. 5, a first octet (Oct 1) in a TCI state activation/deactivation MAC CE for a UE-specific PDSCH DMRS may include a serving cell ID field and a CORESET ID field, and a second octet (Oct 2) may include a CORESET ID field and a TCI state ID field. The sizes thereof may be variable.

- Serving cell ID: a serving cell ID to which the corresponding MAC CE is applied.
- CORESET ID: indicates a CORESET to which the MAC CE is applied. If this value is set to 0, a CORESET configured through *controlResourceSetZero* may be a CORESET #0.
- TCI state ID: means a TCI state ID indicated by the corresponding MAC CE.

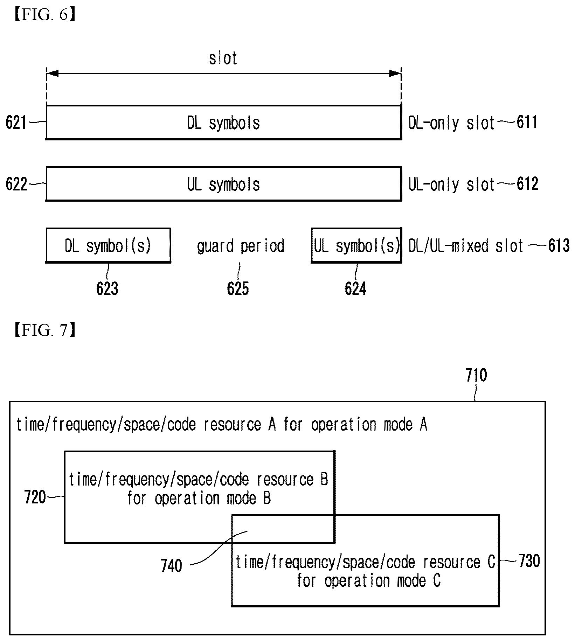

FIG. 6 is a conceptual diagram illustrating exemplary embodiments of slot configurations according to slot formats in a communication system.

Referring to FIG. 6, a certain slot 611 (e.g., DL slot, DL-only slot) may include only downlink symbols 621 depending on a slot format. A certain slot 612 (e.g., UL slot, UL-only slot) may include only uplink symbols 622 depending on a slot format. A certain slot 613 (e.g., DL/UL-mixed slot) may include downlink symbols 623 and uplink symbols 624 depending on a slot format. The certain slot 613 may include a guard period. In other words, some symbols of the certain slot 613 may be configured or indicated as a guard period 625 for downlink-uplink switching. A terminal may not perform communication in the guard period 625.

The base station may configure slot formats spanning one or more slots for each serving cell to the terminal through *tdd-UL-DL-ConfigurationCommon. tdd-UL-DL-ConfigurationCommon* may include at least one of the following information elements. Alternatively, *tdd-UL-DL-ConfigurationCommon* may refer to at least one of the following information elements.

- *ReferenceSubcarrierSpacing:* reference numerology $\mu_{ref}$
- *Pattern1:* A first pattern.
- *Pattern2:* A second pattern.

Here, *pattern1* or *pattern2* may include at least one of the following configurations.

- *dl-UL-TransmissionPeriodicity:* Slot configuration periodicity P expressed in units of msec

- *nrofDownlinkSlots:* The number $d_{slots}$ of slots composed only of downlink symbols
- *nrofDownlinkSymbols:* The number $d_{sym}$ of downlink symbols
- *nrofUplinkSlots:* The number $u_{slots}$ of slots composed only of uplink symbols
- *nrofUplinkSymbols:* The number $u_{sym}$ of uplink symbols

The slot configuration periodicity P msec of the first pattern may include S = P · $2^{\mu_{ref}}$ slots, and in this case, the numerology may follow $\mu_{ref}$. Among the *S* slots, the first $d_{slots}$ slots may include only downlink symbols, and the last $u_{slots}$ slots may include only uplink symbols. In this case, $d_{sym}$ symbols after first $d_{slots}$ slots may be downlink symbols. In addition, $u_{sym}$ symbols before last $u_{slots}$ slots may be uplink symbols. The remaining symbols (i.e.,

$$(S - d_{slots} - u_{slots}) \cdot N_{symb}^{slot} - d_{sym} - u_{sym}$$

symbols) that are not designated as downlink symbols or uplink symbols in the pattern may be flexible symbols.

If the second pattern is configured and the slot configuration periodicity of the second pattern is $P_2$. In this case, a slot configuration periodicity P + $P_2$ msec configured with a combination of the first pattern and the second pattern may include first S = P · $2^{\mu_{ref}}$ slots and second $S_2 = P_2$ · $2^{\mu_{ref}}$ slots. In this case, the positions and numbers of downlink symbols, uplink symbols, and flexible symbols in the second pattern may be configured with reference to the description of the first pattern based on configuration information of the second pattern. In addition, when the second pattern is configured, the terminal may assume (e.g., expect) that P + $P_2$ is a divisor of 20 msec.

The base station configure *tdd-UL-DL-ConfigurationCommon* to the terminal. Direction(s) of flexible symbol(s) among symbols configured through *tdd-UL-DL-Configuration Common* may be overridden based on *tdd-UL-DL-ConfigurationDedicated* (e.g., information elements below).

- *slotSpecificConfigurationsToAddModList:* A set of slot configurations
- *slotIndex:* An index of a slot included in the set of slot configurations
- *symbols:* The directions of the slot indicated by *slotIndex.* If *symbols* is set to *allDownlink,* all symbols within the corresponding slot are downlink symbols. If *symbols* is set to *allUplink*), all symbols within the corresponding slot are uplink symbols. If symbols is set to *explicit, nrofDownlinkSymbols* may indicate the number of downlink symbols located in the starting part of the corresponding slot, and *nrofUplinkSymbols* may indicate the number of uplink symbols located in the last part of the corresponding slot. If *nrofDownlinkSymbols* or *nrofUplinkSymbols* is omitted, *nrofDownlinkSymbols* or *nrofUplinkSymbols* may be regarded as indicating a value of 0, and the remaining symbols within the slot become flexible symbols.

The base station may indicate a slot format to the terminal based on L1 signaling. When the terminal receives a higher layer parameter *SlotFormatIndicator* from the base station, the terminal may obtain configuration information a slot format indication-RNTI (i.e., SFI-RNTI). When the terminal receives a higher layer parameter *dci-PayloadSize* from the base station, the terminal may obtain configuration information of a payload size of the DCI format 2_0.

The terminal may additionally receive, from the base station, information on PDCCH candidate(s), CCE aggregation level, and search space set(s) of a CORESET for monitoring the DCI format 2_0. Each slot format indication (SFI) index field in the DCI format 2_0 may indicate a slot format to be applied to each slot in a slot set of a DL BWP and a UL BWP from a slot in which the terminal has received (e.g., detected) the corresponding DCI format 2_0. The size of the slot set may be equal to or greater than a PDCCH monitoring periodicity of the DCI format 2_0. When the slot set is composed of N slots, the DCI format 2_0 may include N SFI index fields. Each SFI index field may indicate a format value of Tables 9 to 11 below. In Tables 9 to 11, 'D' may mean a downlink symbol, 'U' may mean an uplink symbol, and 'F' may mean a flexible symbol.

[Table 9]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 0 | D | D | D | D | D | D | D | D | D | D | D | D | D | D |
| 1 | U | U | U | U | U | U | U | U | U | U | U | U | U | U |
| 2 | F | F | F | F | F | F | F | F | F | F | F | F | F | F |
| 3 | D | D | D | D | D | D | D | D | D | D | D | D | D | F |
| 4 | D | D | D | D | D | D | D | D | D | D | D | D | F | F |
| 5 | D | D | D | D | D | D | D | D | D | D | D | F | F | F |

(continued)

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 6 | D | D | D | D | D | D | D | D | D | D | F | F | F | F |
| 7 | D | D | D | D | D | D | D | D | D | F | F | F | F | F |
| 8 | F | F | F | F | F | F | F | F | F | F | F | F | F | U |
| 9 | F | F | F | F | F | F | F | F | F | F | F | F | U | U |
| 10 | F | U | U | U | U | U | U | U | U | U | U | U | U | U |
| 11 | F | F | U | U | U | U | U | U | U | U | U | U | U | U |
| 12 | F | F | F | U | U | U | U | U | U | U | U | U | U | U |
| 13 | F | F | F | F | U | U | U | U | U | U | U | U | U | U |
| 14 | F | F | F | F | F | U | U | U | U | U | U | U | U | U |
| 15 | F | F | F | F | F | F | U | U | U | U | U | U | U | U |
| 16 | D | F | F | F | F | F | F | F | F | F | F | F | F | F |
| 17 | D | D | F | F | F | F | F | F | F | F | F | F | F | F |
| 18 | D | D | D | F | F | F | F | F | F | F | F | F | F | F |
| 19 | D | F | F | F | F | F | F | F | F | F | F | F | F | U |

[Table 10]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 20 | D | D | F | F | F | F | F | F | F | F | F | F | F | U |
| 21 | D | D | D | F | F | F | F | F | F | F | F | F | F | U |
| 22 | D | F | F | F | F | F | F | F | F | F | F | F | U | U |
| 23 | D | D | F | F | F | F | F | F | F | F | F | F | U | U |
| 24 | D | D | D | F | F | F | F | F | F | F | F | F | U | U |
| 25 | D | F | F | F | F | F | F | F | F | F | F | U | U | U |
| 26 | D | D | F | F | F | F | F | F | F | F | F | U | U | U |
| 27 | D | D | D | F | F | F | F | F | F | F | F | U | U | U |
| 28 | D | D | D | D | D | D | D | D | D | D | D | D | F | U |
| 29 | D | D | D | D | D | D | D | D | D | D | D | F | F | U |
| 30 | D | D | D | D | D | D | D | D | D | D | F | F | F | U |
| 31 | D | D | D | D | D | D | D | D | D | D | D | F | U | U |
| 32 | D | D | D | D | D | D | D | D | D | D | F | F | U | U |
| 33 | D | D | D | D | D | D | D | D | D | F | F | F | U | U |
| 34 | D | F | U | U | U | U | U | U | U | U | U | U | U | U |
| 35 | D | D | F | U | U | U | U | U | U | U | U | U | U | U |
| 36 | D | D | D | F | U | U | U | U | U | U | U | U | U | U |
| 37 | D | F | F | U | U | U | U | U | U | U | U | U | U | U |
| 38 | D | D | F | F | U | U | U | U | U | U | U | U | U | U |
| 39 | D | D | D | F | F | U | U | U | U | U | U | U | U | U |

[Table 11]

| Slot format | Symbol number within a slot | | | | | | | | | | | | | |
|---|---|---|---|---|---|---|---|---|---|---|---|---|---|---|
| | 0 | 1 | 2 | 3 | 4 | 5 | 6 | 7 | 8 | 9 | 10 | 11 | 12 | 13 |
| 40 | D | F | F | F | U | U | U | U | U | U | U | U | U | U |
| 41 | D | D | F | F | F | U | U | U | U | U | U | U | U | U |
| 42 | D | D | D | F | F | F | U | U | U | U | U | U | U | U |
| 43 | D | D | D | D | D | D | D | D | D | F | F | F | F | U |
| 44 | D | D | D | D | D | D | F | F | F | F | F | F | U | U |
| 45 | D | D | D | D | D | D | F | F | U | U | U | U | U | U |
| 46 | D | D | D | D | D | F | U | D | D | D | D | D | F | U |
| 47 | D | D | F | U | U | U | U | D | D | F | U | U | U | U |
| 48 | D | F | U | U | U | U | U | D | F | U | U | U | U | U |
| 49 | D | D | D | D | F | F | U | D | D | D | D | F | F | U |
| 50 | D | D | F | F | U | U | U | D | D | F | F | U | U | U |
| 51 | D | F | F | U | U | U | U | D | F | F | U | U | U | U |
| 52 | D | F | F | F | F | F | U | D | F | F | F | F | F | U |
| 53 | D | D | F | F | F | F | U | D | D | F | F | F | F | U |
| 54 | F | F | F | F | F | F | F | D | D | D | D | D | D | D |
| 55 | D | D | F | F | F | U | U | U | D | D | D | D | D | D |
| 56 - 254 | Reserved | | | | | | | | | | | | | |
| 255 | UE determines a slot format of a slot based on a higher layer parameter *tdd-UL-DL-Configuration Common* or a higher layer parameter *tdd-UL-DL-ConfigurationDedicated,* and a detected DCI format (when exists). | | | | | | | | | | | | | |

FIG. 7 is a conceptual diagram illustrating exemplary embodiments of a method for allocating one or more operation modes within a resource period.

Referring to FIG. 7, a base station may allocate (e.g., indicate, configure) one or more operation modes to a terminal within a resource period. The base station may allocate an operation mode A 710 for time, frequency, space, and/or code resources to the terminal. The operation mode A may be applied to all available resources without depending on configuration, activation, and/or indication. The operation mode A may be configured, activated, and/or indicated as a fallback mode or a default mode. The operation mode A may be agreed to have the highest priority. The operation mode A may be a default mode configured, activated, and/or indicated to have the highest priority.

The base station may allocate one or more additional operation modes (e.g., operation mode B 720 and/or operation mode C 730 to a resource that overlaps with or does not overlap with resources to which the operation mode A is allocated (e.g., resources to which the operation mode A is applied). The base station may allocate two or more different operation modes to a specific resource 740. The two or more different operation modes may be configured by the base station simultaneously to the same resource. The operation mode(s) applied to a specific resource may be dynamically changed by a MAC CE and/or DCI.

The types of operation modes may be classified according to an applied IAB DU/MT multiplexing mode (e.g., time domain multiplexing (TDM), frequency domain multiplexing (FDM), and/or spatial domain multiplexing (SDM)). The types of operation modes may be classified according to an IAB FDM resource configuration (e.g., whether a frequency domain HSNA (hard, soft, not-available) configuration is applied). The types of operation modes may be classified according to a frequency/time resource configuration for duplex enhancement (e.g., flexible duplex mode (XDD) including FDD, TDD, and subband full duplex (SBFD)) and/or full duplex (FD) (or, in-band full-duplex). For example, the operation mode may be an FDD mode, TDD mode, or SBFD mode.

The types of operation modes may be classified according to a DL TX power control configuration (e.g., whether the DL TX power control configuration is applied). The types of operation modes may be classified according to a restricted/desired distributed unit (DU)/mobile terminal (MT) beam configuration (e.g., whether the restricted/desired

18

DU/MT beam configuration is applied). The types of operation modes may be classified according to a UL power spectral density (PSD) range configuration (e.g., whether the UL PSD range configuration is applied). The types of operation modes may be classified according to whether a slot to which each operation mode is applied is included in a slot list indicated by an IAB MA CE. Various applications of the above-described exemplary embodiments may be possible. For example, one operation mode may be configured based on a combination of various classification conditions. The types of operation modes may not be limited to a specific exemplary embodiment.

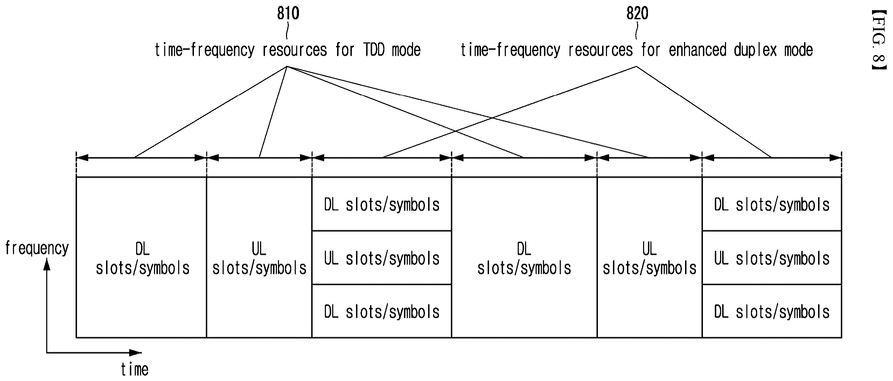

FIG. 8 is a conceptual diagram illustrating exemplary embodiments of a method for allocating one or more operation modes within a resource period.

Referring to FIG. 8, a base station and/or a terminal may operate in a TDD mode 810 during a specific time period (e.g., specific time duration). The base station and/or the terminal may operate in an enhanced duplex mode 820 during another time period. The enhanced duplex mode may include XDD (e.g., flexible duplex mode including FDD, TDD, and/or SBFD), FD, and/or other modes. For example, the enhanced duplex mode may be an SBFD mode. The enhanced duplex mode may not be limited to a specific form. The TDD operation mode 810 may be referred to as the operation mode A, and the enhanced duplex mode 820 may be referred to as the operation mode B. The operation mode B may be referred to as an FD communication mode. The base station may transmit configuration information of the operation mode A and/or configuration information of the operation mode B to the terminal through signaling. The terminal may receive the configuration information of the operation mode A and/or the configuration information of the operation mode B through the signaling of the base station, and may identify a UL communication period, DL communication period, FL period, guard period, UL subband, DL subband, FL subband, and/or guard band based on the configuration information.

The base station may allocate downlink slot(s) and/or symbol(s) for specific frequency resources (e.g., frequency resource group) within the same time period to terminal(s) (e.g., terminal group) in order to support the enhanced duplex mode. The base station may allocate uplink slot(s) and/or symbol(s) for other frequency resources (e.g., frequency resource group) within the same time period to terminal(s) (e.g., terminal group). The various operation modes may be semi-statically allocated for each resource based on higher layer signaling (e.g., F1AP, RRC, MAC CE, etc.). Alternatively, the various operation modes may be dynamically allocated for each resource based on L2 signaling (e.g., MAC CE) and/or L1 signaling (e.g., DCI).

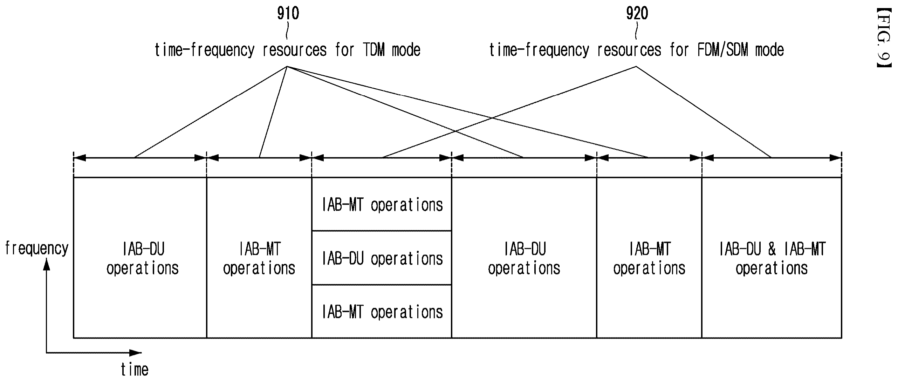

FIG. 9 is a conceptual diagram illustrating exemplary embodiments of a method for allocating one or more operation modes within a resource period.

Referring to FIG. 9, a base station may perform IAB-DU operation(s) and/or IAB-MT operation(s) based on a TDM mode 910 during a specific time period. The TDM mode 910 may be the operation mode A. The TDM mode 910 may be configured by a time domain HSNA configuration. The base station may perform IAB-DU operation(s) and/or IAB-MT operation(s) based on a non-TDM mode 920 (e.g., FDM mode or SDM mode) during another time period. The non-TDM mode 920 may be the operation mode B. The non-TDM mode 920 may be configured by a frequency domain HSNA configuration (e.g., HSNA configuration information).

Each of the operation modes may be classified into detailed operation modes according to other associated functions. For example, a resource A allocated to the TDM mode may be associated with Pc set by higher layer, and the TDM mode may be classified as an operation mode A-1. A PDSCH energy per resource element (EPRE) in the resource A may be derived by *powerControlOffset.* A resource B allocated to the FDM mode may be associated with a provided (or desired) DL Tx power adjustment MAC CE B, and the FDM mode may be classified as an operation mode B-1. A PDSCH EPRE in the resource B may be derived by considering a CSI-RS/PDSCH power ratio by *powerControlOffset* and a value indicated by the MAC CE B. A resource C allocated to the FDM mode may be associated with a provided (or desired) DL Tx power adjustment MAC CE C, and the FDM mode may be classified as an operation mode B-2. A PDSCH EPRE in the resource C may be derived by considering a CSI-RS/PDSCH power ratio by *powerControlOffset* and a value indicated by the MAC CE C.

The various operation modes may be semi-statically allocated for each resource based on higher layer signaling (e.g., F1AP, RRC, MAC CE, etc.). Alternatively, the various operation modes may be dynamically allocated for each resource based on L2 signaling (e.g., MAC CE) and/or L1 signaling (e.g., DCI).

The base station may configure (e.g., indicate) spatial relation information to the terminal through higher layer signaling to indicate uplink beam information. The spatial relation information may indicate that spatial domain filter values used for transmission and reception of a reference RS are applied to a spatial TX filter for transmission of a target RS (e.g., uplink transmission of the target RS having a spatial relation with the reference RS). The reference RS for the spatial relation may be a downlink signal (e.g., SSB, CSI-RS) and/or an uplink signal (e.g., SRS).

When the reference RS is a downlink signal, the terminal may use spatial RX filter values used to receive the reference RS as spatial TX filter values for transmission of the target RS (e.g., the target RS having a spatial relation with the reference RS). When the reference RS is an uplink signal, the terminal may use spatial TX filter values used to transmit the reference RS as spatial RX filter values for reception of the target RS (e.g., the target RS having a spatial relation with the reference RS). A signaling structure for the spatial relation information may vary depending on a type of target RS.

For example, when the target RS is an SRS, the base station may configure SRS resource-specific configuration information to the terminal through higher layer signaling (e.g., RRC signaling) as shown in Table 12 below. The terminal may receive the SRS resource-specific configuration information from the base station.

[Table 12]

```
SRS-SpatialRelationInfo ::=        SEQUENCE {
        servingCellId        // index of a serving cell in which the reference RS is
transmitted
        referenceSignal                            CHOICE {
            ssb-Index    // When the reference RS is SSB, SSB index
            csi-RS-Index    // When the reference RS is CSI-RS, CSI-RS resource
index
            srs                            SEQUENCE {
                resourceId    // When the reference RS is SRS, SRS resource index
                uplinkBWP // When the reference RS is SRS, an index of a UL BWP
in which the SRS is transmitted
                }
            }
```

```
}
```

When the target RS is an SRS, the base station may configure SRS resource-specific configuration information to the terminal through higher layer signaling (e.g., RRC signaling) as shown in Table 13 below. The terminal may receive the SRS resource-specific configuration information from the base station.

[Table 13]

```
PUCCH-SpatialRelationInfo ::=                SEQUENCE {
        pucch-SpatialRelationInfoId    // spatial relation info ID for PUCCH
        servingCellId    // index of a serving cell in which the reference RS is
transmitted
        referenceSignal                            CHOICE {
            ssb-Index        // When the reference RS is SSB, SSB index
            csi-RS-Index    // When the reference RS is CSI-RS, CSI-RS resource
index
            srs            // specify an SRS resource by referring to PUCCH-SRS
configuration
        },
        pucch-PathlossReferenceRS-Id    // index of RS resource used to measure a
path loss of PUCCH
        p0-PUCCH-Id    // configuration index of P0 for PUCCH power control
        closedLoopIndex    // configuration value of closed loop power control
}

PUCCH-SRS ::=    SEQUENCE {
        resource                // SRS resource index
        uplinkBWP            // index of a BWP in which the SRS is transmitted
}
```

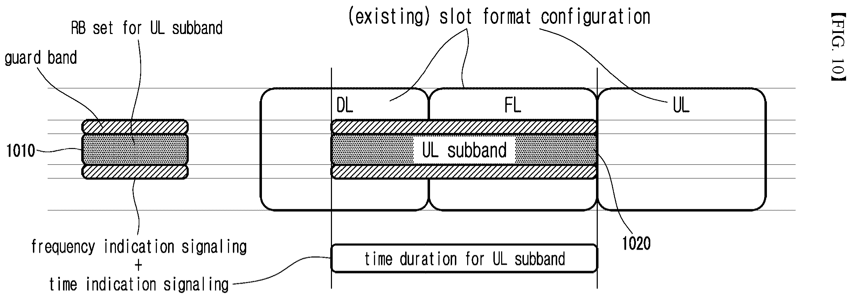

FIG. 10 is a conceptual diagram illustrating exemplary embodiments of an SBFD configuration method.

Referring to FIG. 10, in an SBFD mode, a TDD carrier (e.g., a carrier to which the TDD mode is applied) for the same slot (e.g., the same time period, the same time duration) may be divided into a plurality of subbands, at least one subband among the plurality of subbands may be used for UL communication, and one or more subbands among the plurality of subbands may be used for DL communication. The subband used for UL communication may be a UL subband. The subband used for DL communication may be a DL subband. The UL subband and the DL subband may be configured within the same time period. In this case, UL communication and DL communication may be performed simultaneously within the same time period. According to an SBFD operation, a throughput of UL communication and/or DL communication may be improved. The SBFD operation may include UL communication in the UL subband and/or DL communication in the DL subband.

A base station may transmit an SBFD configuration (e.g., SBFD configuration information) for the SBFD operation to a terminal through signaling. The terminal may receive the SBFD configuration from the base station. The SBFD configuration may be indicated to the terminal based on at least one of a semi-static scheme or a dynamic scheme. The terminal may receive the SBFD configuration from the base station. For example, the terminal may receive frequency indication signaling and/or time indication signaling for an RB set 1010 for the UL subband from the base station. The terminal may identify frequency resources (e.g., frequency band) and/or time resources (e.g., time period, time duration) corresponding to a UL subband 1020 based on the frequency indication signaling and/or time indication signaling, and perform UL communication (e.g., UL transmission) in the identified resources (e.g., time and/or frequency resources).

A time period (e.g., time duration) corresponding to the UL subband 1020 may be located in a DL slot and/or FL slot. The DL slot and/or FL slot may be configured by a slot format configuration. DL communication (e.g., DL transmission) may be performed in the DL slot. UL communication and/or DL communication may be performed in the FL slot. In other words, the UL subband may be configured based on the SBFD configuration (e.g., indication of the SBFD configuration) in a DL period (e.g., DL slot) and/or FL period (e.g., FL slot) configured by a slot format configuration. In this case, DL communication and UL communication may be performed simultaneously in the DL period. The DL communication may be performed in the DL subband within the DL period. The UL communication may be performed in the UL subband within the DL period. The DL subband and the UL subband may be multiplexed in the frequency domain.

The SBFD configuration information may include configuration information for DL subband, UL subband, FL subband, and/or guard band. The base station may transmit the SBFD configuration information to the terminal based on at least one of cell-specific signaling, UE-specific signaling, UE-dedicated signaling, or dynamic signaling (e.g., DCI). The terminal may receive the SBFD configuration information from the base station based on at least one of cell-specific signaling, UE-specific signaling, UE-dedicated signaling, or dynamic signaling. In other words, the SBFD configuration information may be cell-specific configuration information, UE-specific configuration information, UE-dedicated configuration information, and/or dynamic configuration information.

A terminal supporting SBFD (e.g., SBFD-aware terminal) may identify a slot format (e.g., UL slot, DL slot, FL slot) of a time period based on a slot format configuration, and may receive an SBFD configuration applied to a carrier (e.g., TDD carrier) for the time period from the base station. A slot format indicated by the slot format configuration for a specific time period may be different from a slot format indicated by the SBFD configuration (e.g., slot format for a specific subband). In this case, the terminal may perform one of UL communication or DL communication in the specific time period. As another method, if the terminal is able to perform UL communication and DL communication simultaneously, the terminal may perform UL communication and DL communication simultaneously in the specific time period. Alternatively, even if the terminal is able to simultaneously support UL communication and DL communication, the terminal may perform one of UL communication or DL communication in the specific time period. The operation of performing UL communication and DL communication simultaneously may refer to a simultaneous transmission and reception (STR) operation.

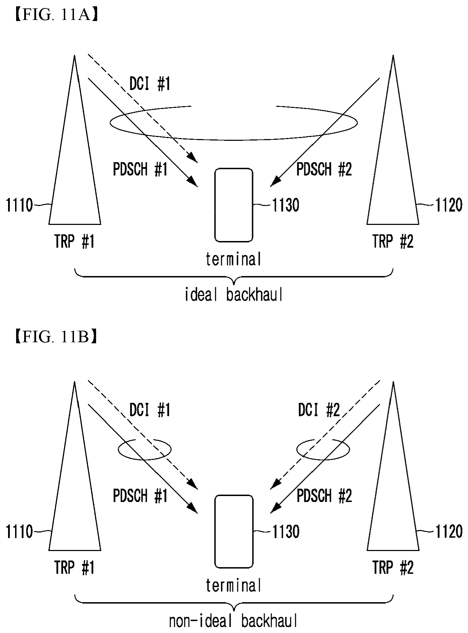

FIG. 11A is a conceptual diagram illustrating exemplary embodiments of a single DCI-based mTRP communication method, and FIG. 11B is a conceptual diagram illustrating exemplary embodiments of a multi-DCI-based mTRP communication method.

Referring to FIG. 11A and FIG. 11B, a TRP #1 1110 and a TRP #2 1120 may be connected by an ideal backhaul or a non-ideal backhaul. In the ideal backhaul, there may be no latency, and in the non-ideal backhaul, there may be a latency. In the above situation, for improvement of a DL data rate and/or frequency efficiency and transmission reliability, mTRP communication (e.g., mTRP operation) may be performed. The mTRP communication may refer to a transmission and reception operation using mTRP.

In the exemplary embodiment of FIG. 11A, a single DCI (sDCI)-based mTRP communication may be performed. For example, a terminal 1130 may receive a DCI #1 from one of the plurality of TRPs (e.g., TRP #1 and #2), and may receive PDSCH(s) (e.g., PDSCH #1 and #2) from the plurality of TRPs based on the DCI #1. In FIG. 11A, the TRP 1110 and the TRP 1120 may be connected through an ideal backhaul. Alternatively, in FIG. 11A, the TRP 1110 and the TRP 1120 may be connected through a non-ideal backhaul.

In the sDCI-based mTRP communication, the terminal 1130 may receive the PDSCH from each of the TRP #1 and TRP #2. The terminal may receive one DCI for scheduling PDSCH transmission of the mTRP, and the one DCI may include multiple transmission configuration indicators (TCIs) considering the mTRP. The TCI(s) (e.g., TCI field) included in the DCI may indicate a quasi-co-location (QCL) type for each TRP. Antenna ports performing transmission in a similar channel environment may have a QCL relationship. The TCI may indicate a type of QCL relationship between a DL reference signal and PDSCH DMRS port(s).

The TCIs (e.g., TCI field) included in one DCI may indicate two different TCI states (e.g., TCI state #1 and TCI state #2). The TCI state #1 may indicate that a QCL type between a DL reference signal #1 (e.g., CSI-RS #1) and the PDSCH #1 (e.g., PDSCH DMRS #1) is a QCL-typeD. The TCI state #1 may indicate that two signals (e.g., two signals and/or channels) having the QCL-typeD are transmitted by the TRP #1. The TCI state #2 may indicate that a QCL type between a DL reference signal #2 (e.g., CSI-RS #2) and the PDSCH #2 (e.g., PDSCH DMRS #2) is a QCL-typeD. The TCI state #2 may indicate that two signals (e.g., two signals and/or channels) having the QCL-typeD are transmitted by the TRP #2.

When one DCI indicates two TCI states, the first TCI state of the two TCI states may correspond to a code division multiplexing (CDM) group of the first antenna port for the first TRP (e.g., TRP #1), and the second TCI state of the two TCI states may correspond to a CDM group of the second antenna port for the second TRP (e.g., TRP #2).

When one DCI indicates two TCI states, the terminal 1130 may receive each PDSCH in a frequency resource associated with each TCI (e.g., each TCI state) based on FDM. The frequency resource associated with the TCI state #1 may not overlap with a frequency resource associated with the TCI state #2. In the exemplary embodiment of FIG. 11A, the terminal 1130 may receive the PDSCH #1 corresponding to a TB #1 from the TRP #1 1110 and may receive the PDSCH #2 corresponding to a TB #2 from the TRP #2 1120. Alternatively, the terminal 1130 may receive each PDSCH corresponding to the same TB from each TRP based on FDM. For example, the terminal 1130 may receive the PDSCH #1 corresponding to a TB from the TRP #1 1110 and may receive the PDSCH #2 corresponding to the TB from the TRP #2 1120. The PDSCH #1 and #2 may correspond to the same TB.

As another method, the terminal 1130 may receive each PDSCH in a time resource associated with each TCI (e.g., each TCI state) based on TDM. The time resource associated with the TCI state #1 may not overlap with a time resource associated with the TCI state #2. The terminal 1130 may receive each PDSCH corresponding to the same TB from each TRP based on TDM. For example, the terminal 1130 may receive the PDSCH #1 corresponding to a TB from the TRP #1 1110 and may receive the PDSCH #2 corresponding to the TB from the TRP #2 1120. The PDSCH #1 and #2 may correspond to the same TB. The terminal 1130 may receive each PDSCH corresponding to the same TB from each TRP 1110 or 1120 through a different PDSCH occasion. In other words, the terminal 1130 may receive the PDSCH #1 corresponding to the TB the from the TRP #1 1110 through a PDSCH occasion #1, and may receive the PDSCH #2 corresponding to the TB from the TRP #2 1120 through a PDSCH occasion #2. The PDSCH occasions #1 and #2 may be different PDSCH occasions.

In the sDCI-based mTRP communication, the terminal 1130 may receive one DCI from one TRP among the mTRP, and may receive a PDSCH from each of the mTRP based on information element(s) included in the one DCI.

In the exemplary embodiment of FIG. 11B, the terminal 1130 may perform multi-DCI (mDCI)-based mTRP communication. The terminal 1130 may receive a DCI from each of the TRPs 1110 and 1120 and may receive a PDSCH from each of the TRPs 1110 and 1120 based on each DCI. For example, the terminal 1130 may receive a DCI #1 from the TRP #1 1110 and may receive a PDSCH #1 from the TRP #1 1110 based on the DCI #1. The terminal 1130 may receive a DCI #2 from the TRP #2 1120 and may receive a PDSCH #2 from the TRP #2 1120 based on the DCI #2.

The terminal 1130 may detect the DCI #1 transmitted by the TRP #1 1110 within a CORESET configured with a CORESET group ID 0. The terminal 1130 may detect the DCI #2 transmitted by the TRP #2 1120 within a CORESET configured with a CORESET group ID 1. A TCI state (e.g., PDCCH TCI state) representing each TRP may be allocated (e.g., configured) for each CORESET group. For example, a TCI state for the TRP #1 may be different from a TCI state for the TRP #2. The terminal 1130 may receive each DCI from each TRP. The terminal 1130 may receive PDSCHs having PDSCH scrambling IDs (e.g., the same PDSCH scrambling ID or different PDSCH scrambling IDs) based on two PDCCH scheduling (e.g., two DCIs) in time and frequency resources (e.g., fully or partially overlapping time and frequency resources). There may be a latency due to a non-ideal backhaul between the TRPs 1110 and 1120. The terminal 1130 may receive the DCI from each of the TRPs 1110 and 1120 and may receive the PDSCH from each of TRPs 1110 and 1120 based on the DCI.

The PDSCH transmission based on mTRP communication (e.g., mDCI based mTRP communication) may be extended to inter-cell operations (e.g., inter-cell mTRP communication). The terminal 1130 may operate based on a synchronization signal block (SSB) associated with a physical cell identifier (PCI) different from a PCI of a serving cell. A plurality of PCIs (e.g., different PCIs) may be configured (e.g., indicated) to the terminal 1130, and one PCI may be activated for inter-cell mTRP communication. The additional PCI may be associated with one or more TCIs. The base station may dynamically indicate a TCI for each TRP using DCI.

PDCCH transmission, PUSCH transmission, and/or PUCCH transmission based on mTRP may be considered. Repeated PDCCH transmission may be performed through multiple search space sets (SSSs) having association (e.g., explicit association). Each of the SSSs (e.g., associated SSSs) may correspond to each of CORESETs having different

**EP 4 686 296 A2**

TCIs. Based on the above-described configuration, beam-diversity can be secured. At least one of an aggregation level, coded bits, DCI payload, or grant may be configured identically in PDCCH repetitions (e.g., repeated PDCCH transmissions). The terminal 1130 may perform PDCCH monitoring by considering the number of PDCCH repetitions.

The repeated PUCCH transmission based on mTRP may be supported. For example, each of the TRP #1 1110 and the TRP #2 1120 may transmit the same DCI. In other words, the same DCI may be repeatedly transmitted by the mTRP (i.e., TRPs 1110 and 1120). The mTRP-based repeated PUCCH transmission may be applied to intra-slot and/or inter-slot cases. Single TRP-based repeated PUCCH transmission may be supported. For example, one TRP may repeatedly transmit the same DCI. The single TRP-based repeated PUCCH transmission and the mTRP-based repeated PUCCH transmission may be dynamically switched. The switching between the single TRP-based repeated PUCCH transmission and mTRP-based repeated PUCCH transmission may be indicated by DCI.

The repeated PUSCH transmission based on mTRP may be supported. Codebook-based mTRP repeated PUSCH transmission or non-codebook-based mTRP repeated PUSCH transmission may be supported. In mTRP-based repeated PUSCH transmission, the number of SRS resource sets may be at most 2. Single TRP-based repeated PUSCH transmission may be supported. The single TRP-based repeated PUSCH transmission and the mTRP-based repeated PUSCH transmission may be dynamically switched. The switching between the single TRP-based repeated PUSCH transmission and the mTRP-based repeated PUSCH transmission may be indicated by DCI.

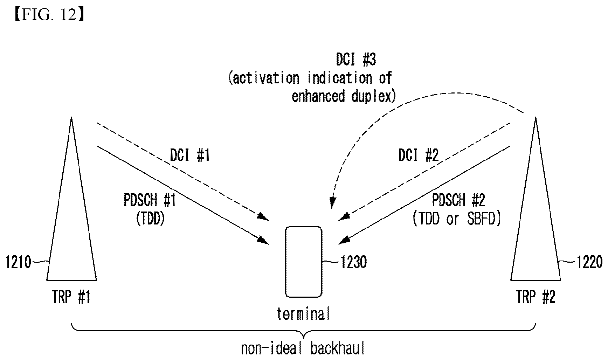

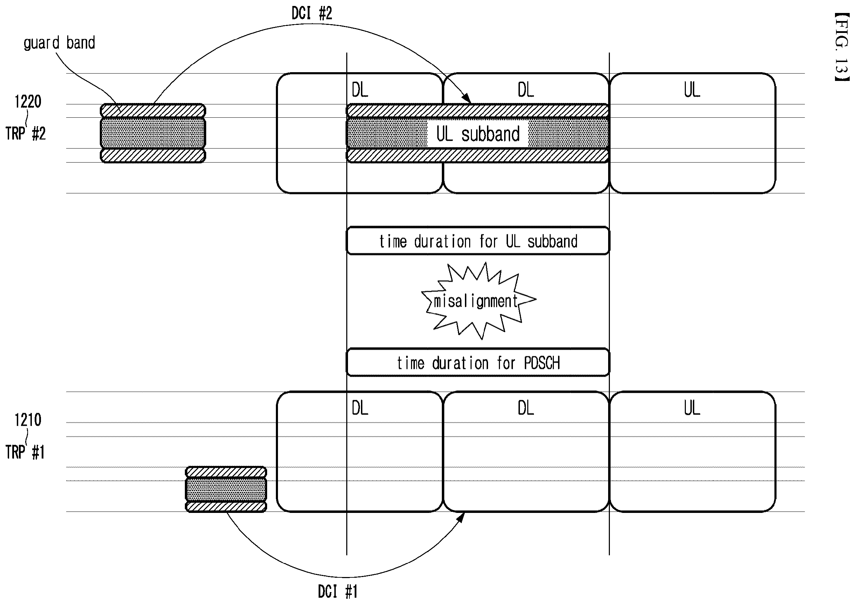

FIG. 12 is a conceptual diagram illustrating exemplary embodiments of mTRP-based SBFD operations, and FIG. 13 is a conceptual diagram illustrating exemplary embodiments of resource allocation by mTRP.

Referring to FIG. 12 and FIG. 13, a terminal 1230 may receive PDSCHs from mTRP (i.e., TRPs 1210 and 1220). The TRP #1 1210 and the TRP #2 1220 may be connected through a non-ideal backhaul. There may be a latency in the non-ideal backhaul. The terminal 1230 may receive a DCI #1 from the TRP #1 1210 and may receive a DCI #2 from the TRP #2 1220. In other words, the terminal 1230 may receive control information (e.g., DCI) for each TRP by performing monitoring for a CORESET group associated with each TRP. The DCI may include at least one of time resource information, frequency resource information, or spatial resource information. The terminal 1230 may identify time resources, frequency resources, and/or spatial resources based on information element(s) included in the DCI.

The resources (e.g., time, frequency, and/or spatial resources) indicated by the TRP #1 1210 may not be aligned with the resources indicated by the TRP #2 1220. 'Resources are not aligned' may mean that different transmission directions (e.g., UL, DL, FL) are indicated for the same resource. An operation mode (e.g., TDD mode, FDD mode, and/or SBFD mode) indicated by the TRP #1 1210 may not be aligned with an operation mode indicated by the TRP #2 1220. For example, the TRP #1 1210 may indicate a TDD mode and the TRP #2 1220 may indicate an SBFD mode.

The terminal 1230 may be connected to two TRPs 1210 and 1220 and may receive a DCI for each of the two TRPs 1210 and 1220 by monitoring two or more CORESET groups. The DCI #1 transmitted by the TRP #1 1210 may schedule one or more PDSCH transmissions. The DCI #2 transmitted by the TRP #2 1220 may include SBFD configuration information (e.g., resource allocation information for SBFD operation and/or activation indication for SBFD operation). The resource allocation information for SBFD operation may indicate resource allocation in a time period that is fully or partially overlapped with (e.g., the same time duration as) a time period indicated by the DCI #1.

The DCI #1 and DCI #2 may be applied to the same time period. The time period to which the DCI #1 is applied may fully or partially overlap with the time period to which the DCI #2 is applied. In the same time period to which the DCI #1 and DCI #2 are applied, the DCI #1 may indicate that the terminal 1230 receives a PDSCH from each of the TRPs 1210 and 1220, and the DCI #2 may indicate that the terminal 1230 performs UL communication and DL communication simultaneously based on the SBFD operation. In other words, a misalignment problem may occur due to the DCI #1 and DCI #2.

In the exemplary embodiment of FIG. 13, the terminal 1230 may receive a PDSCH from each of the TRPs 1210 and 1220 based on the DCI received from each of the TRPs 1210 and 1220. Based on scheduling information included in the DCI of each of the TRPs 1210 and 1220, the TRP #1 1210 may schedule mTRP-based PDSCH transmissions in a specific time period, and the TRP #2 1220 may schedule UL communication and DL communication according to the SBFD operation in the specific time period. In this case, since a misalignment problem occurs between the operation indicated by the TRP #1 1210 and the operation indicated by the TRP #2 1220, the communication may not be performed smoothly. If a misalignment problem occurs due to multiple DCIs in a situation where a terminal receives each DCI from each TRP in mTRP communication, an interpretation method of the multiple DCIs and/or an operation method of the terminal based on the interpretation may be needed.

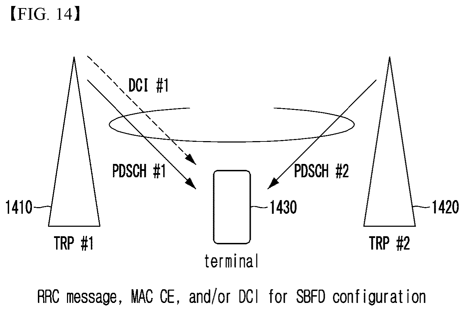

FIG. 14 is a conceptual diagram illustrating a misalignment situation between a sDCI-based mTRP operation and an SBFD operation.

Referring to FIG. 14, a terminal 1430 may perform sDCI-based mTRP operations (e.g., single DCI-based mTRP communication). The terminal 1430 may receive a DCI #1 (e.g., DCI #1 indicating sDCI-based mTRP operation) from a TRP #1 1410, and may receive a PDSCH from each of the TRP #1 1410 and TRP #2 1420 based on the DCI #1. In other words, the terminal 1430 may receive a PDSCH #1 from the TRP #1 1410 based on the DCI #1, and may receive a PDSCH #2 from the TRP #2 1420 based on the DCI #1.

23

The terminal 1430 may receive an SBFD configuration (e.g., configuration indicating SBFD operation) through signaling independent of the DCI #1. The SBFD configuration (e.g., SBFD configuration information) may be indicated by at least one of RRC signaling, MAC signaling, or PHY signaling. A misalignment problem may occur in a specific time period due to the SBFD configuration and the DCI #1 (e.g., DCI #1 indicating the sDCI-based mTRP communication).

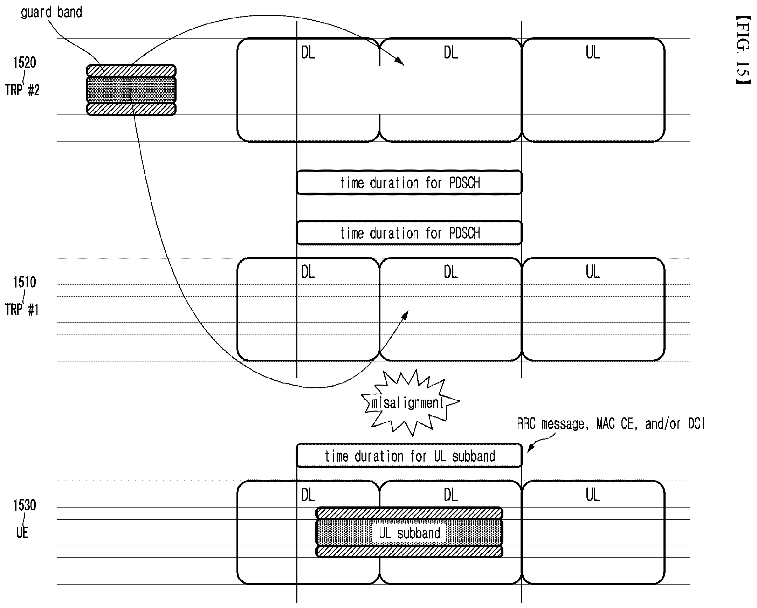

FIG. 15 is a conceptual diagram illustrating a misalignment situation between a sDCI-based mTRP operation and an SBFD operation.

Referring to FIG. 15, a terminal 1530 may receive a DCI for sDCI-based mTRP communication, and may receive a PDSCH based on scheduling information included in the DCI. A base station (e.g., network) may allocate a downlink resource (e.g., downlink slot) to each of a TRP #1 1510 and a TRP #2 1520 in a specific time period based on the single DCI. The terminal 1530 may receive the PDSCH from each of the TRP #1 1510 and TRP #2 1520. A configuration indicating an SBFD operation to the terminal 1530 may exist. The configuration indicating the SBFD operation may be an SBFD configuration. The SBFD configuration may be indicated through at least one of RRC signaling (e.g., RRC message), MAC signaling (e.g., MAC CE), or PHY signaling (e.g., DCI).

The SBFD configuration may indicate to configure a UL subband and/or DL subband in a specific time period (e.g., specific time duration). For example, the SBFD configuration may indicate to configure a UL subband in a time period in which the PDSCH of the TRP #1 1510 and/or TRP #2 1520 is received. The terminal 1530 may receive the DCI for sDCI-based mTRP communication and SBFD configuration. The SBFD configuration may be received through signaling independent of the DCI. An operation indicated by the DCI may be different from the operation indicated by the SBFD configuration in the same time period. In this case, a misalignment problem may occur.

Meanwhile, the mTRP communication configuration and/or SBFD configuration may be indicated to the terminal by various signaling schemes. The mTRP communication configuration and/or SBFD configuration may be indicated to the terminal by various forms. The signaling scheme and/or form may be based on at least one scheme and/or form defined in Table 14 below. Based on at least one scheme and/or form defined in Table 14, configuration information for mTRP communication (e.g., sDCI-based mTRP communication or mDCI-based mTRP communication) and/or SBFD configuration information may be indicated to the terminal. If an operation indicated by the mTRP configuration information (e.g., configuration information for mTRP communication) is different from an operation indicated by the SBFD configuration information in the same time period, a misalignment problem may occur.

[Table 14]

| |
|---|
| - The terminal may receive a DCI including a configuration for sDCI-based mTRP communication and a DCI including an SBFD configuration. |
| - The terminal may receive a higher layer signaling (e.g., RRC message and/or MAC CE) including a configuration for mTRP communication (e.g., sDCI-based mTRP communication) and a higher layer signaling (e.g., RRC message and/or MAC CE) including an SBFD configuration. |
| - The terminal may receive a DCI including a configuration for sDCI-based mTRP communication and a higher layer signaling (e.g., RRC message and/or MAC CE) including an SBFD configuration. |
| - The terminal may receive a higher layer signaling (e.g., RRC message and/or MAC CE) including a configuration for mTRP communication (e.g., sDCI-based mTRP communication) and a DCI including an SBFD configuration. |
| - The terminal may receive a plurality of DCIs (e.g., two DCIs) including a configuration for mDCI-based mTRP communication and a DCI including an SBFD configuration. |
| - The terminal may receive a plurality of DCIs (e.g., two DCIs) including a configuration for mDCI-based mTRP communication and a higher layer signaling (e.g., RRC message and/or MAC CE) including an SBFD configuration. |
| - The terminal may receive a higher layer signaling (e.g., RRC message and/or MAC CE) including configuration for mTRP communication (e.g., mDCI based mTRP communication) and a higher layer signaling (e.g., RRC message and/or MAC CE) including an SBFD configuration. |
| - The terminal may receive a higher layer signaling (e.g., RRC message and/or MAC CE) including a configuration for mTRP communication (e.g., mDCI based mTRP communication) and a DCI including an SBFD configuration. |

In Table 14, the mTRP configuration included in the higher layer signaling may mean a configured grant (CG) configuration and/or a semi-persistent scheduling (SPS) configuration. Different misalignment resolution methods (e.g., different collision resolution methods) may be applied depending on the respective cases in Table 14. The collision may mean a misalignment problem. A case in which a configuration of a first DCI and a configuration of a second DCI collide may be considered. If a collision (e.g., misalignment problem) occurs in a time period due to configurations indicated by multiple DCIs (e.g., DCI for mTRP communication and DCI for SBFD configuration), the terminal may determine which DCI among the multiple DCIs to operate on. For example, the terminal may operate on the basis of an indication (e.g.,

configuration) of the most recently received DCI among the multiple DCIs. In other words, the terminal may compare reception times of the multiple DCIs, and may operate in the time period (e.g., time period in which the collision or misalignment problem occurs) based on the indication of the DCI received most recently among the multiple DCIs.

The exemplary embodiments of the present disclosure may be applied to a case where a configuration of a first signaling (e.g., RRC message, MAC CE, DCI) is a configuration of a first operation, and a configuration of a second signaling (e.g., RRC message, MAC CE, DCI) is a configuration of a second operation. Each of the first operation and the second operation may be a UL operation, a DL operation, or an SBFD operation. If a first UL configuration and a second UL configuration collide, if a first DL configuration and a second DL configuration collide, if a first SBFD configuration and a second SBFD configuration collide, if a UL configuration and a DL configuration collide, if a UL configuration and an SBFD configuration collide, and/or if a DL configuration and an SBFD configuration collide, exemplary embodiments of the present disclosure (e.g., methods for solving the misalignment problem) may be applied.

A case where a configuration of a higher layer signaling (e.g., RRC message and/or MAC CE) and a configuration of a DCI collide may be considered. The terminal may receive the higher layer signaling and the DCI. The higher layer signaling may include mTRP configuration information (or SBFD configuration information), and the DCI may include SBFD configuration information. Alternatively, the higher layer signaling may include SBFD configuration information, and the DCI may include mTRP configuration information (or SBFD configuration information). In a specific time period, the higher layer signaling and the DCI may indicate different operations (e.g., UL communication and/or DL communication). In this case, a collision (e.g., misalignment problem) may occur in the specific time period.

Priorities for the higher layer signaling (e.g., configuration by the higher layer signaling) and the DCI (e.g., configuration by the DCI) may be set to the terminal. The terminal may compare the priority of the higher layer signaling with the priority of the DCI, and select a configuration with a higher priority. The DCI may mean dynamic signaling. If the priority of the dynamic signaling (e.g., DCI) is higher than the priority of the higher layer signaling, the terminal may operate based on the configuration (e.g., indication) of the dynamic signaling in the specific time period in which the collision occurs. If the priority of the higher layer signaling is higher than the priority of the dynamic signaling (e.g., DCI), the terminal may operate based on the configuration (e.g., indication) of the higher layer signaling in the specific time period in which the collision occurs. A priority may be set according to a type of signaling message (e.g., RRC message, MAC CE, DCI). The priorities may be set as 'DCI > MAC CE > RRC message'. In other words, DCI may have the highest priority, and RRC message may have the lowest priority. Alternatively, the priorities may be set as 'DCI < MAC CE < RRC message'. In other words, DCI may have the lowest priority and RRC message may have the highest priority.

The mTRP configuration information (e.g., mTRP communication configuration) may be indicated by a first higher layer signaling, and the SBFD configuration may be indicated by a second higher layer signaling. Since configuration (e.g., RRC configuration) by a higher layer signaling is controlled by the base station (e.g., network), the base station may configure each of the mTRP communication configuration and the SBFD configuration so that the mTRP communication configuration and the SBFD configuration do not collide. The base station (e.g., network) may recognize in advance configurations that cause a collision in a specific time period. If the mTRP communication configuration and the SBFD configuration are indicated by the higher layer signaling, the mTRP communication configuration and the SBFD configuration may be indicated so that they do not collide with each other. Therefore, if the mTRP communication configuration and the SBFD configuration are indicated by the higher layer signaling, a collision between the mTRP communication configuration and the SBFD configuration may not occur.

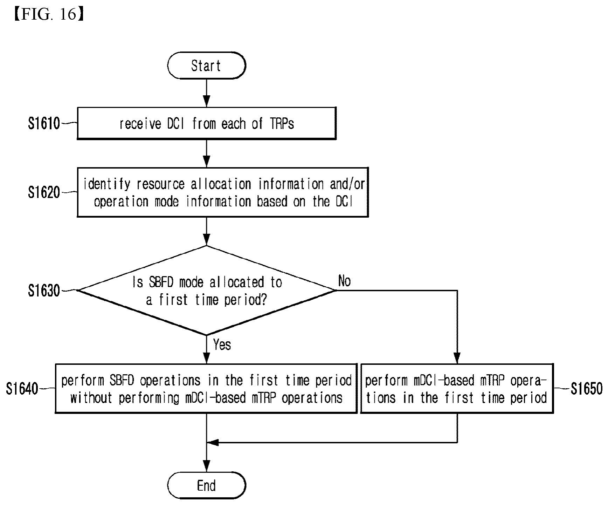

FIG. 16 is a flowchart illustrating an operation of a terminal in a misalignment situation.

Referring to FIG. 16, mDCI based mTRP communication may be performed. A terminal may receive a DCI from each of the TRPs (S1610). For example, the terminal may receive a DCI #1 from a TRP #1 and may receive a DCI #2 from a TRP #2. The DCI #1 and DCI #2 may include different information elements. In other words, the DCI #1 and the DCI #2 may not be the same DCI. The terminal may identify resource allocation information and/or operation mode information based on each DCI received from each TRP (S1620). For example, the terminal may identify time resource information, frequency resource information, and/or spatial resource information based on the information element(s) included in the DCI. The terminal may identify a duplex mode (e.g., TDD mode, FDD mode, SBFD mode) based on the information element(s) included in the DCI.

The terminal may check whether the SBFD mode is applied (e.g., allocated, indicated, configured) in a first time period (e.g., specific time period) based on the information element(s) included in the DCI (S1630). One of the DCI #1 and DCI #2 may indicate that the SBFD mode is applied in the first time period. In other words, one DCI may indicate an SBFD operation in the first time period. The one DCI may include an SBFD configuration. The SBFD configuration may indicate that a first subband of a frequency band for the first time period is configured as a UL subband or a DL subband. The time period (e.g., first time period) may be configured for a TDD operation and/or an unpaired spectrum operation.

The first time period may be configured as a DL communication period or an UL communication period by a higher layer signaling of the base station. In the DL communication period, DL communication may be performed, and the DL communication period may include one or more DL slots. In the UL communication period, UL communication may be performed, and the UL communication period may include one or more UL slots. The SBFD operation may be an operation of performing UL communication and DL communication simultaneously in the same time period. The SBFD configuration may include configuration of a UL subband in which UL communication is performed within the DL communication period and/or configuration of a DL subband in which DL communication is performed within the UL communication period.

When the SBFD mode is applied in the first time period, the terminal may perform the SBFD operation without performing multi-DCI-based mTRP operation in the first time period (S1640). In other words, the terminal may perform the SBFD operation based on a DCI (e.g., DCI including the SBFD configuration) that indicates the SBFD operation among a plurality of DCIs. In this case, the terminal may ignore the remaining DCIs excluding the DCI that indicates the SBFD operation among the plurality of DCIs. On the other hand, if none of the plurality of DCIs indicates the SBFD operation, the terminal may perform the multi-DCI-based mTRP operation in the first time period (S1650).

The case where the mTRP operation and the SBFD operation are applied (e.g., indicated) in the first time period may mean a case where a collision (e.g., misalignment problem) occurs in the first time period. If the first time period is a DL communication period, the mTRP operation (e.g., multi-DCI-based mTRP operation) is DL communication, and the SBFD operation includes UL communication, the DL communication (e.g., mTRP operation) may collide with the UL communication (e.g., SBFD operation) in the first time period. Alternatively, if the first time period is a UL communication period, the mTRP operation (e.g., multi-DCI-based mTRP operation) is UL communication, and the SBFD operation includes DL communication, the UL communication (e.g., mTRP operation) may collide with the DL communication (e.g., SBFD operation) in the first time period.

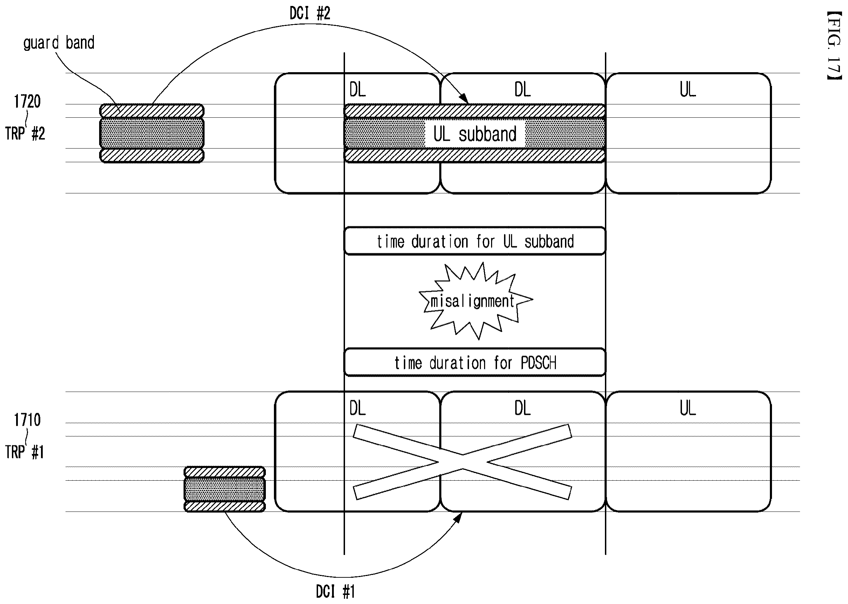

The exemplary embodiment of FIG. 16 may be performed as shown in FIG. 17 below.

FIG. 17 is a conceptual diagram illustrating an operation of a terminal in a misalignment situation.

Referring to FIG. 17, a TRP #1 1710 may transmit a DCI #1. The DCI #1 may indicate mTRP based PDSCH transmissions in a first time period (e.g., first time duration). A TRP #2 1720 may transmit a DCI #2. The DCI #2 may indicate an SBFD operation in the first time period. The DCI #2 may include an SBFD configuration, and the SBFD configuration may indicate (e.g., allocate) a UL subband within the first time period. The DCI #2 may indicate that UL communication is performed in the UL subband within the first time period. The DCI #2 may indicate that DL communication is performed in a subband (e.g., DL subband) other than the UL subband in the first time period. In other words, the DCI #2 may schedule UL communication and DL communication in the first time period. If the configuration by the DCI #1 and the configuration by the DCI #2 collide and/or if one of the DCI #1 and DCI #2 indicates the SBFD operation, the terminal may perform the SBFD operation in the first time period based on the DCI indicating the SBFD operation (e.g., DCI #2 of the TRP #2 1720). The terminal may ignore the DCI #1 (e.g., indication of the DCI #1) received from the TRP #1 1710.

The time period (e.g., first time period) may be configured for a TDD operation and/or unpaired spectrum operation. The above-described exemplary embodiments may be applied not only to the SBFD operation but also to the XDD operation including full duplex operation and/or IAB DU/MT simultaneous operation.

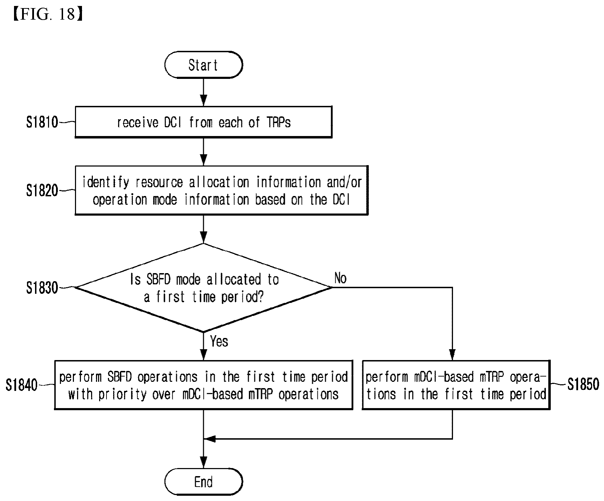

FIG. 18 is a flowchart illustrating an operation of a terminal in a misalignment situation.

Referring to FIG. 18, mDCI based mTRP communication may be performed. A terminal may receive a DCI from each of TRPs (S1810). For example, the terminal may receive a DCI #1 from a TRP #1 and may receive a DCI #2 from a TRP #2. The DCI #1 and DCI #2 may include different information elements. In other words, the DCI #1 and DCI #2 may not be the same DCI. The terminal may identify resource allocation information and/or operation mode information based on each DCI received from each TRP (S1820). For example, the terminal may identify time resource information, frequency resource information, and/or spatial resource information based on the information element(s) included in the DCI. The terminal may identify a duplex mode (e.g., TDD mode, FDD mode, SBFD mode) based on the information element(s) included in the DCI.

The terminal may check whether the SBFD mode is applied (e.g., allocated, indicated, configured) in a first time period (e.g., specific time period) based on the information element(s) included in the DCI (S1830). One DCI among the DCI #1 and DCI #2 may indicate that the SBFD mode is applied in the first time period. In other words, one DCI may indicate the SBFD operation in the first time period. The one DCI may include an SBFD configuration. The SBFD configuration may indicate that a first subband of a frequency band for the first time period is configured as a UL subband or DL subband. The time period (e.g., first time period) may be configured for a TDD operation and/or unpaired spectrum operation.

The first time period may be configured as a DL communication period or UL communication period by a higher layer signaling of the base station. DL communication may be performed in the DL communication period, and the DL communication period may include one or more DL slots. UL communication may be performed in the UL communication period, and the UL communication period may include one or more UL slots. The SBFD operation may be an operation of performing UL communication and DL communication simultaneously in the same time period. The SBFD configuration may include configuration of a UL subband in which UL communication is performed in the DL communication period and/or configuration of a DL subband in which DL communication is performed in the UL communication period.

When the mTRP operation and the SBFD operation are applied (e.g., indicated) in the first time period, the terminal may perform the SBFD operation with priority over the mDCI-based mTRP operation in the first time period (S1840). A priority of the mDCI-based mTRP operation and a priority of the SBFD operation may be set to the terminal. The terminal may compare a priority of the DCI #1 (e.g., mDCI based mTRP operation) with a priority of the DCI #2 (e.g., SBFD operation). If the priority of the SBFD operation is higher than the priority of the mDCI based mTRP operation, the terminal may perform the SBFD operation with priority. In other words, if the SBFD operation and another operation (e.g., mDCI based mTRP operation) collide in the first time period, the terminal may perform the SBFD operation with priority. On the other hand, if none of the plurality of DCIs indicates the SBFD operation, the terminal may perform the mDCI based mTRP operation in the first time period (S1850).

The case where the SBFD mode is applied in the first time period may mean the case where a collision (e.g., misalignment problem) occurs in the first time period. When the first time period is a DL communication period, the mTRP operation (e.g., mDCI-based mTRP operation) is DL communication, and the SBFD operation includes UL communication, the DL communication (e.g., mTRP operation) may collide with the UL communication (e.g., SBFD operation) in the first time period. Alternatively, if the first time period is a UL communication interval, the mTRP operation (e.g., mDCI-based mTRP operation) is UL communication, and the SBFD operation includes DL communication, the UL communication (e.g., mTRP operation) may collide with the DL communication (e.g., SBFD operation) in the first time period.

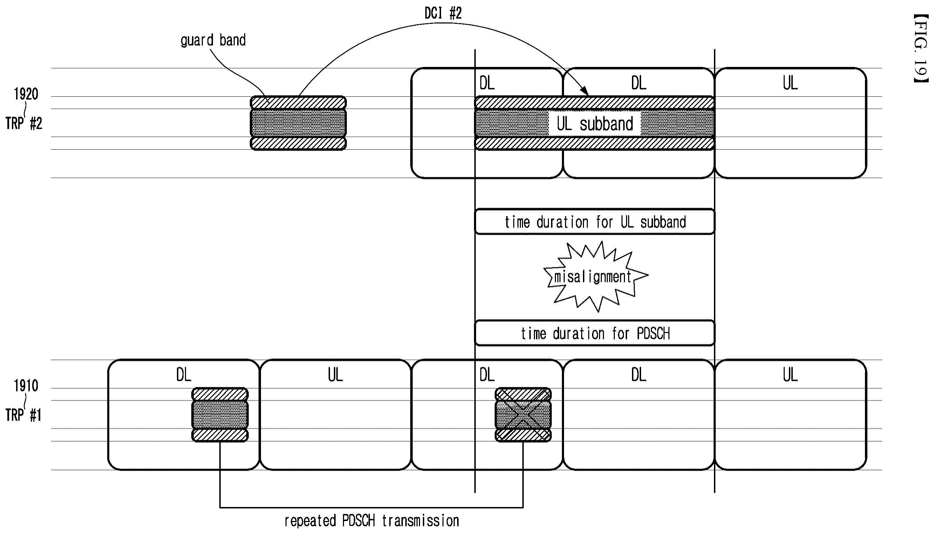

The exemplary embodiment of FIG. 18 may be performed as in FIG. 19 below.

FIG. 19 is a conceptual diagram illustrating an operation of a terminal in a misalignment situation.

Referring to FIG. 19, a TRP #1 1910 may transmit a DCI #1. The DCI #1 may indicate repeated PDSCH transmission. The exemplary embodiment of FIG. 19 may be applied not only to repeated PDSCH transmission but also to repeated PDCCH transmission, repeated PUCCH transmission, and/or repeated PUSCH transmission. The TRP #1 1910 may transmit (e.g., repeatedly transmit) a PDSCH in resources for which repeated PDSCH transmission is configured. A TRP #2 1720 may transmit a DCI #2. The DCI #2 may indicate an SBFD operation in a first time period (e.g., first time duration). The DCI #2 may include an SBFD configuration, and the SBFD configuration may indicate (e.g., allocate) a UL subband within the first time period. The DCI #2 may indicate that UL communication is performed in a UL subband within the first time period. The DCI #2 may indicate that DL communication is performed in a subband (e.g., DL subband) other than the UL subband within the first time period. In other words, the DCI #2 may schedule UL communication and DL communication in the first time period. The time period (e.g., the first time period) may be configured for a TDD operation and/or unpaired spectrum operation.

In other time periods excluding the first time period, the repeated PDSCH transmission indicated by the DCI #1 and the SBFD operation indicated by the DCI #2 may not collide. Therefore, the repeated PDSCH transmission may be performed in other time periods excluding the first time period. In the first time period, the repeated PDSCH transmission indicated by the DCI #1 and the SBFD operation indicated by the DCI #2 may collide. Therefore, the repeated PDSCH transmission may not be performed in the first time period. In other words, the terminal may interpret that the SBFD operation has priority over other operations (e.g., repeated PDSCH transmission) while performing operations based on DCIs received from the respective TRPs. Based on the above interpretation, the terminal may perform the SBFD operation with priority without performing other operations (e.g., repeated PDSCH transmission) in a specific time period (e.g., specific time period in which a collision occurs), and may perform other operations (e.g., repeated PDSCH transmission) in a time period in which a collision does not occur.

The above-described exemplary embodiments may be applied not only to the SBFD operation but also to the XDD operation including a full duplex operation and/or IAB DU/MT simultaneous operation.

When a misalignment problem (e.g., collision) occurs, the terminal may operate based on a CORESET having a lower CORESET ID. There may be a high probability that adjacent TRPs support the same duplex mode. Considering the above, the terminal may be configured to operate based on an indication of a specific DCI among multiple DCIs received from TRPs. The terminal may receive a DCI #1 indicating an SBFD operation in a CORESET having a CORESET group ID 0 (e.g., CORESET ID 0), and may receive a DCI #2 indicating another operation (e.g., multi-DCI based mTRP operation, repeated PDSCH transmission) in a CORESET having a CORESET group ID 1 (e.g., CORESET ID 1). In this case, the terminal may perform the SBFD operation based on the DCI received in the CORESET having the CORESET group ID 0 (e.g., CORESET ID 0), which is the lower CORESET group ID (e.g., the lower CORESET ID) among the CORESET group IDs 0 and 1 (e.g., CORESET IDs 0 and 1). The terminal may ignore the DCI #2 indicating another operation. The DCI #1 may be received from the TRP #1, and the DCI #2 may be received from the TRP #2.

Alternatively, the terminal may receive a DCI #1 indicating another operation (e.g., multi DCI-based mTRP operation, repeated PDSCH transmission) in a CORESET having a CORESET group ID 0 (e.g., CORESET ID 0), and may receive a DCI #2 indicating an SBFD operation in a CORESET having a CORESET group ID 1 (e.g., CORESET ID 1). In this case, the terminal may perform the another operation based on the DCI received in the CORESET having the CORESET group ID 0 (e.g., CORESET ID 0), which is the lower CORESET group ID (e.g., the lower CORESET ID) among the CORESET group IDs 0 and 1 (e.g., CORESET IDs 0 and 1). The terminal may ignore the DCI #2 indicating the SBFD operation. In other words, the terminal may operate based on the DCI corresponding to the CORESET having the lower CORESET group ID (e.g., the lower CORESET ID). On the other hand, the terminal may operate based on the DCI corresponding to the CORESET having the higher CORESET group ID (e.g., the higher CORESET ID).

The above-described exemplary embodiments (e.g., exemplary embodiments of FIGS. 10 to 19) may be applied not only to a PDSCH transmission and reception operation, but also to a transmission and reception operation of other downlink signals/channels (e.g., PDCCH, CSI-RS) and/or a transmission and reception operation of other uplink signals/channels (e.g., PUSCH, PUCCH, SRS, random access channel (RACH)). 'DCI for PDSCH allocation' may be replaced with 'DCI for PUSCH allocation', 'DCI for PUCCH allocation', 'DCI for CSI-RS request', and/or 'DCI for SRS request' depending on exemplary embodiments. 'Higher layer signaling (e.g., RRC message and/or MAC CE) for PDSCH allocation' may be replaced with 'higher layer signaling for PUSCH allocation', 'higher layer signaling for PUCCH allocation', 'higher layer signaling for CSI-RS configuration', and/or 'higher layer signaling for SRS configuration' depending on exemplary embodiments.

According to the above-described exemplary embodiments, when an SBFD operation and another operation (e.g., mTRP operation) collide in a specific time period, the terminal may select one operation based on priorities thereof and perform the selected operation. The base station may expect (e.g., estimate) that the terminal performs the selected operation based on the priorities.

The operations of the method according to the exemplary embodiment of the present disclosure can be implemented as a computer readable program or code in a computer readable recording medium. The computer readable recording medium may include all kinds of recording apparatus for storing data which can be read by a computer system. Furthermore, the computer readable recording medium may store and execute programs or codes which can be distributed in computer systems connected through a network and read through computers in a distributed manner.

The computer readable recording medium may include a hardware apparatus which is specifically configured to store and execute a program command, such as a ROM, RAM or flash memory. The program command may include not only machine language codes created by a compiler, but also high-level language codes which can be executed by a computer using an interpreter.

Although some aspects of the present disclosure have been described in the context of the apparatus, the aspects may indicate the corresponding descriptions according to the method, and the blocks or apparatus may correspond to the steps of the method or the features of the steps. Similarly, the aspects described in the context of the method may be expressed as the features of the corresponding blocks or items or the corresponding apparatus. Some or all of the steps of the method may be executed by (or using) a hardware apparatus such as a microprocessor, a programmable computer or an electronic circuit. In some embodiments, one or more of the most important steps of the method may be executed by such an apparatus.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A method of a terminal, comprising:

   receiving a first signaling message for a first operation from a first transmission and reception point (TRP);
   receiving a second signaling message for a second subband full duplex (SBFD) operation from a second TRP;
   in response to an indication for performing the first operation and the second SBFD operation in a first time period, selecting one operation among the first operation and the second SBFD operation based on a preconfigured criterion; and
   performing the one operation in the first time period,
   wherein the first operation is an uplink (UL) operation, a downlink (DL) operation, or a first SBFD operation.

2. The method according to claim 1, wherein when the first operation and the second SBFD operation collide in the first time period, the one operation is selected, and when the first time period is a DL communication period, the first operation includes DL communication, and the second SBFD operation includes UL communication or when the first time period is a UL communication period, the first operation includes UL communication, and the second SBFD operation includes DL communication, the first operation and the second SBFD operation are determined to collide.

3. The method according to claim 1, wherein the selecting of the one operation comprises:

comparing a first priority of the first operation with a second priority of the second SBFD operation; and
selecting the one operation having a higher priority among the first operation and the second SBFD operation.

4. The method according to claim 1, wherein the selecting of the one operation comprises:

comparing a first reception time of the first signaling message with a second reception time of the second signaling message; and
selecting the one operation indicated by a most recently received one signaling message among the first signaling message and the second signaling message.

5. The method according to claim 1, wherein the selecting of the one operation comprises:

comparing a first control resource set (CORESET) identifier (ID) of a CORESET from which the first signaling message is received with a second CORESET ID of a CORESET from which the second signaling message is received; and
selecting the one operation indicated by one signaling message received from a CORESET having a lower CORESET ID among the first signaling message and the second signaling message.

6. The method according to claim 1, wherein the selecting of the one operation comprises:

identifying a type of each of the first signaling message and the second signaling message; and
selecting the one operation indicated by one signaling message corresponding to a type having a higher priority among the first signaling message and the second signaling message,
wherein the type is a radio resource control (RRC) message, a medium access control (MAC) control element (CE), or downlink control information (DCI).

7. The method according to claim 1, further comprising: performing a remaining operation other than the one operation among the first operation and the second SBFD operation in a second time period after the first time interval.

8. The method according to claim 1, wherein the first time period is configured for a time division duplex (TDD) operation or unpaired spectrum operation, and a first subband of a frequency band for the first time period is indicated as a UL subband or a DL subband by the second signaling message.

9. A terminal comprising at least one processor,
wherein the at least one processor causes the terminal to perform:

receiving a first signaling message for a first operation from a first transmission and reception point (TRP);
receiving a second signaling message for a second subband full duplex (SBFD) operation from a second TRP;
in response to an indication for performing the first operation and the second SBFD operation in a first time period, selecting one operation among the first operation and the second SBFD operation based on a preconfigured criterion; and
performing the one operation in the first time period,
wherein the first operation is an uplink (UL) operation, a downlink (DL) operation, or a first SBFD operation.

10. The terminal according to claim 9, wherein when the first operation and the second SBFD operation collide in the first time period, the one operation is selected, and when the first time period is a DL communication period, the first operation includes DL communication, and the second SBFD operation includes UL communication or when the first time period is a UL communication period, the first operation includes UL communication, and the second SBFD operation includes DL communication, the first operation and the second SBFD operation are determined to collide.

11. The terminal according to claim 9, wherein in the selecting of the one operation, the at least one processor further causes the terminal to perform:

comparing a first priority of the first operation with a second priority of the second SBFD operation; and
selecting the one operation having a higher priority among the first operation and the second SBFD operation.

12. The terminal according to claim 9, wherein in the selecting of the one operation, the at least one processor further causes the terminal to perform:

comparing a first reception time of the first signaling message with a second reception time of the second signaling message; and

selecting the one operation indicated by a most recently received one signaling message among the first signaling message and the second signaling message.

13. The terminal according to claim 9, wherein in the selecting of the one operation, the at least one processor further causes the terminal to perform:

comparing a first control resource set (CORESET) identifier (ID) of a CORESET from which the first signaling message is received with a second CORESET ID of a CORESET from which the second signaling message is received; and

selecting the one operation indicated by one signaling message received from a CORESET having a lower CORESET ID among the first signaling message and the second signaling message.

14. The terminal according to claim 9, wherein in the selecting of the one operation, the at least one processor further causes the terminal to perform:

identifying a type of each of the first signaling message and the second signaling message; and

selecting the one operation indicated by one signaling message corresponding to a type having a higher priority among the first signaling message and the second signaling message,

wherein the type is a radio resource control (RRC) message, a medium access control (MAC) control element (CE), or downlink control information (DCI).

15. The terminal according to claim 9, wherein the at least one processor further causes the terminal to perform: performing a remaining operation other than the one operation among the first operation and the second SBFD operation in a second time period after the first time interval.

16. The terminal according to claim 9, wherein the first time period is configured for a time division duplex (TDD) operation or unpaired spectrum operation, and a first subband of a frequency band for the first time period is indicated as a UL subband or a DL subband by the second signaling message.

【FIG. 1】

【FIG. 2】

[FIG. 3]

EP 4 686 296 A2

S311

RRC

| TCI #1 | TCI #2 | TCI #3 | · · · | TCI #M |

S312

MAC CE

| TCI #1 | TCI #2 | · · · | TCI #N |

S313 — indicated TCI

320

TCI state configuration

QCL reference (e.g. SSB, CSI-RS) — 321

large-scale channel characteristics

QCL target (e.g. CSI-RS, DMRS) — 322

【FIG. 4】

| | | | | | | | | |
|---|---|---|---|---|---|---|---|---|
| **Oct 1** | BWP ID | | serving cell ID | | | | | CORESET pool ID |
| **Oct 2** | $T_0$ | $T_1$ | $T_2$ | $T_3$ | $T_4$ | $T_5$ | $T_6$ | $T_7$ |
| **Oct 3** | $T_8$ | $T_9$ | $T_{10}$ | $T_{11}$ | $T_{12}$ | $T_{13}$ | $T_{14}$ | $T_{15}$ |
| ⋯ | | | | | | | | |
| **Oct N** | $T_{(N-2)\times8}$ | $T_{(N-2)\times8+1}$ | $T_{(N-2)\times8+2}$ | $T_{(N-2)\times8+3}$ | $T_{(N-2)\times8+4}$ | $T_{(N-2)\times8+5}$ | $T_{(N-2)\times8+6}$ | $T_{(N-2)\times8+7}$ |

【FIG. 5】

| | | | Oct 1 |
|---|---|---|---|
| serving cell ID | CORESET ID | | |
| CORESET ID | TCI state ID | | Oct 2 |

【FIG. 6】

slot

621 — DL symbols | DL-only slot — 611

622 — UL symbols | UL-only slot — 612

DL symbol(s) | guard period | UL symbol(s) | DL/UL-mixed slot — 613

623 | 625 | 624

【FIG. 7】

710

time/frequency/space/code resource A for operation mode A

720 — time/frequency/space/code resource B for operation mode B

740 — time/frequency/space/code resource C for operation mode C — 730

【FIG. 8】

[FIG. 9]

910
time-frequency resources for TDM mode

920
time-frequency resources for FDM/SDM mode

frequency

| IAB-DU operations | IAB-MT operations | IAB-MT operations | IAB-DU operations | IAB-MT operations | IAB-DU & IAB-MT operations |
| | | IAB-DU operations | | | |
| | | IAB-MT operations | | | |

time

【FIG. 10】

【FIG. 11A】

【FIG. 11B】

【FIG. 12】

[FIG. 13]

EP 4 686 296 A2

【FIG. 14】

RRC message, MAC CE, and/or DCI for SBFD configuration

【FIG. 15】

【FIG. 16】

```
                    ╭─────────╮
                    │  Start  │
                    ╰─────────╯
                         │
                         ▼
S1610──   ┌─────────────────────────────────┐
          │     receive DCI from each of TRPs │
          └─────────────────────────────────┘
                         │
                         ▼
S1620──   ┌─────────────────────────────────────┐
          │ identify resource allocation information and/or │
          │  operation mode information based on the DCI │
          └─────────────────────────────────────┘
                         │
                         ▼
                    ╱───────────╲
S1630──          ╱  Is SBFD mode allocated to  ╲      No
                ╲    a first time period?      ╱──────────┐
                    ╲───────────╱                        │
                         │                               │
                        Yes                              │
                         ▼                               ▼
S1640──  ┌──────────────────────────────────┐  ┌──────────────────────────┐
         │ perform SBFD operations in the first time period │  │ perform mDCI-based mTRP opera- │  ──S1650
         │  without performing mDCI-based mTRP operations │  │ tions in the first time period │
         └──────────────────────────────────┘  └──────────────────────────┘
                         │                               │
                         ▼◄──────────────────────────────┘
                    ╭─────────╮
                    │   End   │
                    ╰─────────╯
```

【FIG. 17】

【FIG. 18】

```
                        ( Start )
                            │
                            ▼
S1810─┤     receive DCI from each of TRPs      │
                            │
                            ▼
S1820─┤ identify resource allocation information and/or │
      │   operation mode information based on the DCI    │
                            │
                            ▼
                         ╱       ╲
                        ╱ Is SBFD  ╲        No
S1830─┤        ╱  mode allocated to  ╲──────────────┐
               ╲   a first time period? ╱           │
                ╲                      ╱            │
                    ╲    Yes    ╱                   │
                        │                           ▼
                        ▼                    ┌─────────────────────┐
      ┌──────────────────────────────────┐  │ perform mDCI-based mTRP opera- │
S1840─┤ perform SBFD operations in the first time period │  │ tions in the first time period │─S1850
      │ with priority over mDCI-based mTRP operations │  └─────────────────────┘
      └──────────────────────────────────┘           │
                        │◄──────────────────────────────┘
                        ▼
                     ( End )
```

【FIG. 19】